# EUROPEAN PATENT SPECIFICATION

(11) **EP 0 738 673 B1**
(45) Date of publication and mention of the grant of the patent: **28.06.2000**
(21) Application number: 95114327.0
(22) Date of filing: 12.09.1995
(51) Int. Cl.: B65G 35/00, B61B 13/12

(54) **Conveying system**
Fördersystem
Système de transport

(30) Priority: 20.04.1995 JP 9408095; 30.05.1995 JP 13090195
(43) Date of publication of application: 23.10.1996
(73) Proprietor: DAIFUKU CO., LTD., Osaka-shi, Osaka (JP)
(72) Inventor: Kyotani, Hisashi, Osaka-shi, Osaka (JP); Okamura, Takashi, Katano-shi, Osaka (JP); Hamano, Kiyoshi, Moriguchi-shi, Osaka (JP)
(74) Representative: Füchsle, Klaus, Dipl.-Ing.

(56) References cited:
- DE-A- 2 413 653
- DE-A- 2 729 724
- GB-A- 2 073 691
- GB-A- 2 099 772
- GB-A- 2 227 986
- PATENT ABSTRACTS OF JAPAN vol. 6, no. 181 (M-156) [1059] , 17 September 1982 & JP-A-57 090312 (DAIFUKU KIKO), 5 June 1982,

## Description

### Field of the Invention

The present invention rcates to a conveying system available in an assembly line of automobiles or the like, and more particularly to a plurality of transport cars without any driving means can be driven in close contact with each other on an endless conveying path.

### Background of the Invention

A conveying system in which a plurality of transport cars without any driving means are driven on a fixed conveying path is known in the prior art, as an example, from Unexamined Japanese Patent Application Publication No. H 2-209309 a family member of which is GB-A-2 227 986 which discloses a conveying system having the features indicated in the preamble clause of claim 1.

The conveying system comprises a friction feeder which is constituted by friction feed rollers pressed against the side face of the transport car and a motor for driving the rollers and is disposed at an upper stream side of the conveying path supporting the plurality of transport cars operably, and a friction brake which is constituted by friction brake rollers pressed against the side face of the transport car and a motor for driving the rollers in a retrograde direction and is disposed at a down stream side, wherein the transport car contacted with the friction feed rollers is propelled by the friction feeder to push and move all of the transport cars positioned in front, and the transport car pushed from behind is prevented, by the friction brake, from moving onwards at high speed than the following transport car by the inertia.

However, in such conventional conveying system disclosed in the above-mentioned Japanese Patent Application Publication No. H 2-209309 (or in the corresponding document GB-A-2 227 986), the transport car is a rigid structure consisting of one carriage, so that the following problems were encountered.

That is, the transport cars may be pushed and driven smoothly on a straight path, whereas, for example, on a curved horizontal path, a refraction angle between the preceding and following transport cars or an angle refracted from the straight serial condition is large, so that a forward component force of the preceding transport car in a push force exerted on the preceding transport car from the following transport car becomes smaller and a running resistance of the preceding transport car increases, thus the pushing operation is not performed smoothly. The longer the total length of the transport car, the more remarkable the phenomenon, so that such transport cars were not available in a conveying system for long objects.

### Summary of the Invention

A primary object of the present invention is to provide a conveying system allowing even a longer transport car to push and propell on curved horizontal or vertical paths.

With the above and other objectives in view, the present invention provides a conveying system according to claim 1. The system comprises guide rails disposed along a conveying path having curve sections, transport cars supported movably by said guide rails, and a friction feeder for the transport cars, wherein said transport cars comprises a main body supported onto said guide rails movably by guidance means and a support for objects to be conveyed, while said main body has a plurality of movable bodies in the running direction, coupling means for coupling the movable bodies so as to allow a relative yielding motion between the movable bodies at the curve sections in the conveying paths, and driven faces formed on the movable bodies in parallel to the running direction, and said support for objects to be conveyed is provided on, at least, one of said movable bodies, wherein said feeder is disposed at a suitable location in said conveying path and comprises a feed roller adapted to act on the driven faces of said movable bodies and a motor for driving the feed roller. Preferred embodiments of the invention are indicated in the dependent claims.

According to the conveying system of the present invention, even when the total length of the transport car becomes longer due to the long objects supported on the support, the main body supported and guided on the guide rails via the guidance means is constituted by the movable bodies divided into plural numbers in the running direction and coupled flexibly by the couplers, so that a refraction angle between the movable bodies when transport on the curved horizontal path, or the angle refracted from the straight serial condition is small. In other words, the refraction angle between the front movable body of the following transport car and the rear movable body of the preceding transport car, when passing the curved horizontal path in the state where the preceding transport car is pushed by the following transport car, becomes smaller.

Thus, in an arrangment in which front and rear ends of the main body of the transport cars are provided with a contact portion adapted to contact one another when the preceding transport car is pushed by the following transport car, the feed rollers act on the driven portion forwards by the feeder, when used as pushing and propelling the preceding transport car, the push force of the following transport car acts efficiently as a forward propelling force of the preceding transport car on the curved horizontal path, thus it can be pushed and driven smoothly.

Also, since the movable bodies constituting the main body of the transport car can be formed into a bar shape which is sufficiently smaller than a width of the support supporting the objects, when used as pushing and propelling the preceding transport car as mentioned before, even on the curved horizontal path, an amount of lateral variance of the acting position from the curved horizontal guide rails can be limited to the minimum, thus it can be pushed and driven smoothly and efficiently.

In an embodiment of the conveying system of the present invention, in the conveying path, there are a zone in which the transport car is pushed and driven by said feeder, and a zone in which the transport car is forcibly driven by a disengageable feeder is provided, wherein said disengageable feeder comprises a driven body disposed at a front-end portion of the main body of the transport car, drive-release operating means disposed at a rear-end portion of the main body, a pusher moving along the conveying path and engaged to said driven body, and said driven body and said pusher are disengageable with each other so that, when the following transport car approaches to the preceding quiescent transport car, said drive-release operating means of the preceding quiescent transport car disengages the driven body of the following transport car and the pusher.

According to such configuration, the transport cars can be connected one after another in train and driven at a constant speed in the pushing and driving zone, and the transport cars can be suitably spaced corresponding to the distance of the pusher and driven at a constant speed in the forcible driven zone by the disengageable feeder. In other words, while conveying the objects by the same transport car, the running condition can be changed responsive to works on the objects, and the transport cars can be stored automatically in the forcible driven zone by the disengageable feeder.

In this case, the driven unit is mounted on the guidance means disposed on the front end of the front movable body, and the drive-release operating unit is mounted on the guidance means disposed on the rear end of the rear movable body, at least, one of the guidance means with the driven unit and the guidance means with the drive-release operating unit being supported movably within a fixed range in the running direction relative to the movable body supporting the guidance means, and held at a fixed position by a spring.

In such configuration, when the transport cars are pushed and driven by the feeder, the guidance means with the driven unit and the guidance means with the drive-release operating unit, which are positioned respectively at the front end of the following transport car and at the rear end of the preceding front transport car, are adjacent to each other. The drive-release operating unit of the preceding transport car is in the state of switching the driven unit of the following transport car to a non-operating position (disengaging position to the pusher). Thus, when there is a curved vertical path forming opposite ends of an ascending path and a descending path in the traveling path, and, further where the main body (movable bodies) is on the upper side relative to the guide rails, the contact positions for pushing the preceding and following transport cars separate as the transport car passes the end portion of the ascending path and the start portion of the descending path, and the pushing operation is carried out by the guidance means with the driven unit positioned at the front end of the following transport car and the guidance means with the drive-release operating unit positioned at the rear end of the preceding transport car.

However, according to the above-mentioned configuration, an urging force by the spring is set weaker than a pushing force by the feeder, so that, when the guidance means with the driven unit positioned at the front end of the following transport car and the guidance means with the drive-release operating unit position at the rear end of the preceding transport car push one another as aforementioned, at least one of the guidance means is retreated against the urging force of the spring, and the contact portions at end portions of the movable body for transferring the pushing force are contacted one another to prevent the distance between the preceding and following transport cars from becoming larger and to accomplish a good pushing operation.

Furthermore, an engage piece and an engageable portion which are disengageable one another and coupling the adjoining preceding and following transport cars can be disposed at the front and rear ends of the transport cars.

According to this configuration, the adjoining preceding and following transport cars are connected in train by coupling one another with the engage piece and the engageable portion and are driven by the feeder, thereby a group of following transport cars at the upper stream side of the feeder are also tractive and drivable.

In an embodiment of the conveying system in which the conveying path is endless and the transport cars arranged in closed contact throughout the endless conveying path are circulated in a unit, the movable bodies of the main body of the transport car can be coupled one another swingably in the laterally horizontal direction by the coupling means, and the transport cars can be connected in endless train by the coupling means for coupling one another swingably in the laterally horizontal direction.

In the case of adopting such configuration, the main body of the transport cars may be constituted by the movable body having the support for objects being conveyed and the movable body having a work deck so that, even during conveying the objects, the operator on the work deck can work on the objects mounted on the support for objects.

Also, an expansion allowable portion is provided for allowing the expansion of total length of the group of transport cars connected in endless train, so that the movable bodies turning along the circular curved horizontal path in the endless conveying path makes change in position so as to prevent an excessive tension and unreasonable slack on the group of transport cars connected in endless train for smooth rotation thereof.

Meanwhile,at least one movable body among the movable bodies constituting the main body of, at least, one of the transport cars is constituted adjustably lengthwise in the running direction, so that an error between the total length of the endless conveying path and the total length of the group of transport cars connected in endless train n the conveying path can be absorbed by adjusting the length of the movable bodies.

In the following, some preferred embodiments of the present invention are described with reference to the accompanying drawings.

### Brief Description of the Drawings

Fig.1 is a side view showing a first embodiment of the present invention and a transport car being pushed and driven;
Fig.2 is a plan view showing the transport car;
Fig.3 is a partly cross-sectional view showing a coupling means in a main body of the transport car;
Fig.4 is a side view showing a contact portion between the transport cars;
Fig.5 is an expanded cross-sectional plan view of essential portion of the contact portion.
Fig.6 is a cross-sectional front view showing a drive furnace to which objects being conveyed is conveyed by the transport car;
Fig.7 is an expanded front view of essential portions;
Fig.8 is a plan view of a feeder driving the transport car;
Fig.9 is a partly cross-sectional side view of the feeder.
Fig.10 is a side view illustrating a disengageable feeder commonly used in the embodiment;
Fig.11 is an expanded side view of essential portions of Fig.10;
Fig.12 is a partly cutaway front view of Fig.11;
Fig.13 is a schematic plan view showing an entire layout of a conveying path of the embodiment;
Fig.14 is a plan view illustrating a running state of the transport car at a curved horizontal path in the conveying path;
Fig. 15 is a side view illustrating a running state of the transport car at an ascending and descending path in the conveying path.
Fig.16 is an expanded side view showing a contact portion between the transport cars at the ascending and descending path;
Fig.17 is a cross-sectional side view showing a second embodiment of the present invention and a coupling state of the transport cars;
Fig.18 is a partly cutaway plan view showing a coupling state of the transport cars;
Fig.19 is a cross-sectional front view showing a feeder driving the transport car;
Fig.20 is a cross-sectional plan view showing a feeder driving the transport car;
Fig.21 is a cross-sectional side view showing a coupler between the transport cars, and a detailed structure of the transport car whose main body can be adjusted lengthwise;
Fig.22 is a cross-sectional plan view of the transport car whose main can be adjusted lengthwise;
Fig.23 is a side view illustrating a lift used in the second embodiment;
Fig.24 is a cross-sectional front view showing the lift and the transport car;
Fig.25 is a schematic plan view illustrating an entire layout of a conveying path of the present embodiment;
Fig.26 is a side view showing a third embodiment of the present invention and a transport car;
Fig.27 is a partly cross-sectional side view illustrating a main body of the transport car;
Fig.28 is a cross-sectional front view of the embodiment;
Fig.29 is a schematic plan view illustrating an entire layout of a conveying path of the embodiment; and
Fig.30 is a cross-sectional front view illustrating a guide means of a transport car at a U turn portion.

### Detailed Description of Preferred Embodiments

### ( First Embodiment )

A first embodiment of the present invention is described in the following according to the drawings.

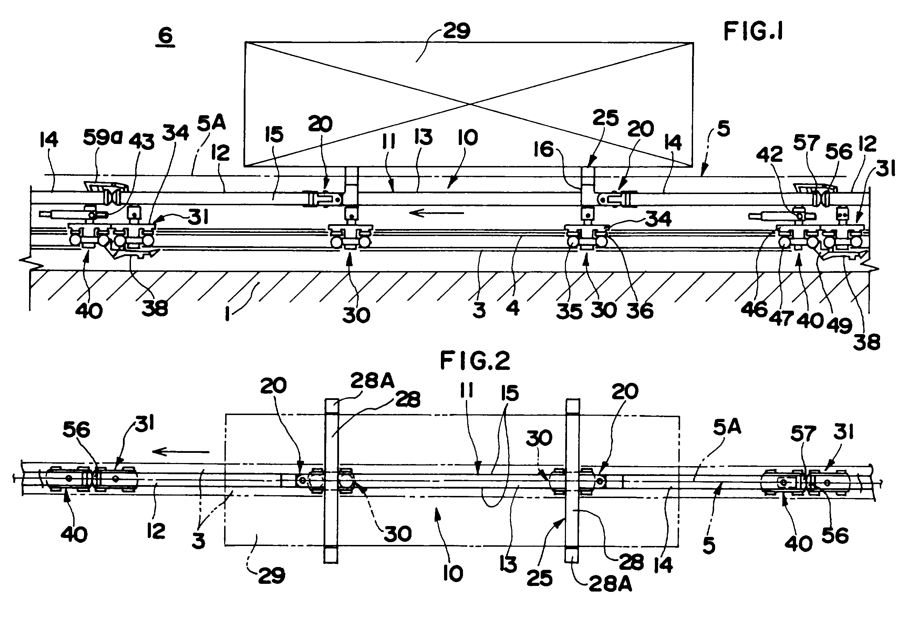

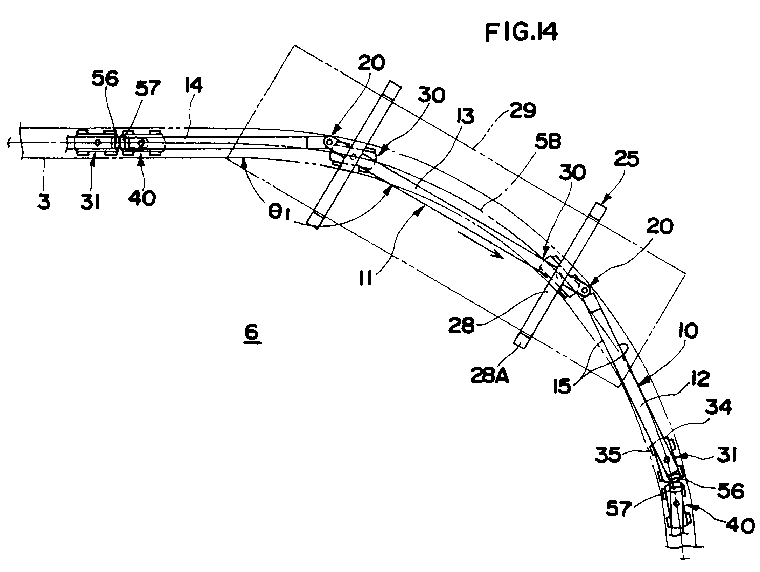

As shown in Fig. 1, Fig. 2, Fig. 7 and Fig. 13, a pair of right and left guide rails 3 facing one another in a horizontal direction at open portions are provided on a floor 1 via a frame 2, and a square bar-shaped guide member 4 is laid on an upper surface of upper side edge portion on the open side of the guide rails 3. A conveying path 5 is formed by the guide rails 3, and hereupon, as shown in Fig. 13, the conveying path 5 is formed into an elliptic endless shape by a pair of linear sections 5A which are parallel to each other and curved horizontal sections 5B connecting between start and end portions of the linear sections 5A.

The elliptic endless conveying path 5 is divided into two portions at a pair of linear sections 5A parallel to each other, one side of which is used as a dense moving zone 6 and the other side is used as an expanded moving zone 7. Meanwhile, in the dense moving zone 6, an ascending path 5a is incorporated in one linear sections 5A and a descending path 5B is incorporated in the other linear sections 5A.

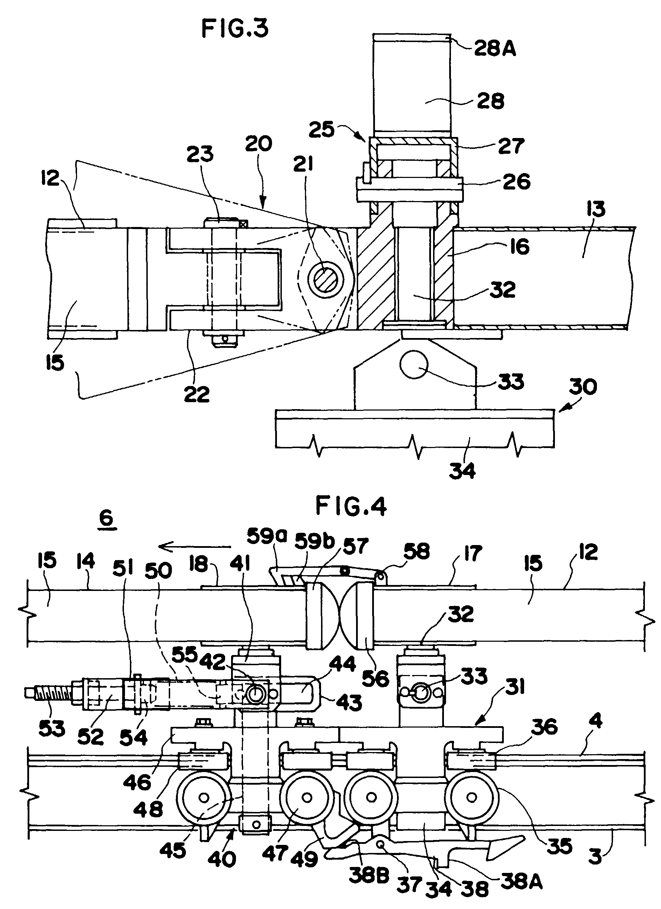

A plurality of transport cars 10 supported and guided by the guide rails 3 and moving on the conveying path 5 are provided. A main body 11 of the transport car 10 is formed by three movable bodies 12, 13 and 14. The movable bodies 12, 13 and 14 are constituted by a square cylinder and their both side faces are formed into driven faces 15. Between the front movable body 1 and center movable body 13, and between the center movable body 13 and the rear movable body 14 are coupled swingably with each other in vertical and horizontal direction via coupling means 20. That is, as shown in Fig. 1 through Fig. 3, the coupling means 20 are provided between end members 16 integrated with the front and rear ends of the center movable body 13 and facing ends of the front and rear movable bodies 12, 14 to constitute a trunion type, wherein a coupler 22 is mounted to the end member 16 swingably vertically via a laterally horizontal cross pin 21, and at the same time, coupled swingably laterally to the facing ends of the front and rear movable bodies 12, 14 via a vertical longitudinal pin 23.

A support for objects being conveyed 25 and a pair of front and rear guidance means 30 in the running direction supported and guided by the guide rails 3 are disposed on, at least, one of the movable bodies 12, 13 and 14, the center movable body 13 in this embodiment, and on the remaining movable bodies, the front and rear movable bodies 12, 14 in this embodiment, guidance means 31, 40 supported and guided by the guide rails 3 are disposed at free ends apart from the center movable body 13 including the support for objects being conveyed 25.

The support for objects being conveyed 25 is constituted by a bracket 27 fixed to an upper portion of the end member 16 of the center movable body 13 via a front-to-rear horizontal joint pin 26, and laterally horizontal support frames 28 provided on the bracket 27, on lateral opposite ends of the support frames 28, supports 28A for objects being conveyed 29 such as an automobile body are disposed.

As pair of front and rear guidance means 30 provided on the center movable body 13, a trolley constituted by, a vertical pin 32 fixed rotatably to the end member 16, a trolley body 34 coupled rotatably to the lower end of the vertical pin 32 via a laterally horizontal pin 33, a pair of front and rear supporting horizontal shaft rollers 35 pivoted on opposite sides of the trolley body 34 and engaged to the guide rails 3, and a pair of front and rear steady rest vertical shaft rollers 36 pivoted on the upper portion of the trolley body 34 and guided between the guide members 4 of the guide rails 3 is utilized.

The guidance means 31 provided at the free end side of the movable body 12 also has a same configuration as the guidance means 30, and as shown in Fig. 1, Fig. 2 and Fig. 4, utilizes a trolley constituted by, the vertical pin 32 fixed rotatably to an end member 17 of the movable body 12, the laterally horizontal pin 33, the trolley body 34, the supporting horizontal shaft rollers 35 and the steady rest vertical shaft rollers 36. Under the trolley body 34, a driven unit 38 is pivoted swingably vertically at the position near its front end by a laterally horizontal support pin 37. An engage face 38A facing backward is formed at a portion extending backward from the support pin 37 of the driven unit 38, and an operable face 38B is formed on the upper side of a portion extending forward from the support pin 37.

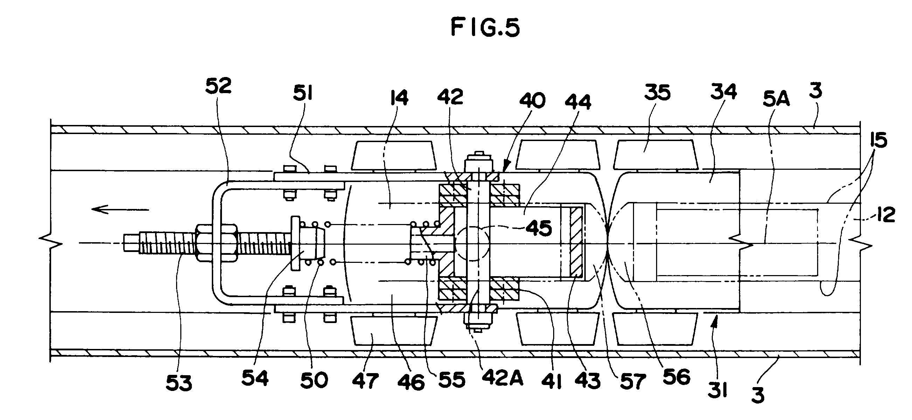

Guidance means 40 provided on the free end side of the rear movable body 14 is coupled variably to the rear movable body 14. That is, as shown in Fig. 1, Fig. 2, Fig. 4 and Fig. 5, a fate-shaped bracket 41 is disposed under the end member 18 provided on the free end side of the rear movable body 14, and a laterally horizontal pin 42 is disposed on the bracket 41. A front-to-rear movable body 43 is fixed movably in a front-to-rear direction to the laterally horizontal pin 42.

A longitudinal pin 45 is disposed downward in a body from the front-to-rear movable body 43, and a trolley body 46 of the guidance means 40 is mounted rotatably to the longitudinal pin 45 as same as aforementioned. Supporting horizontal shaft rollers 47 and a steady rest roller 48 are pivoted on the trolley body 46. Thereby, the guidance means 40 is coupled to the rear movable body 14 rotatably about an axis 42A of the laterally horizontal pin 42, and further, coupled movably within a fixed range in a front-to-rear direction via the pin 42 and the front-to-rear long hole 44. Under the trolley body 46, a drive-release operating unit 49 of the following transport car, which acts on the operable face 38B of the driven unit 38 to swing the driven unit 38 as such that the engage face 38A moves upward, is protruded backward. The guidance means 40 is provided with a spring 50 which urges and moves it backward. That is, a pair of right and left side plates 51 of a gate-shaped bracket 52 are supported by opposite ends of the laterally horizontal pin 42, and the spring 50 is interposed between a cradle 54 mounted backward to the bracket 52 via a front-to-rear position adjusting bolt 53 and a cradle 55 facing forward and formed in a body with the front-to-rear movable body 42.

The front and rear ends of the main body 11 of the transport car 10, or the front end of the end member 17 of the front movable body 12 and the rear end of the end member 18 of the rear movable body 14 are formed into contact portions 56, 57. On the upper front end side of the front movable body 12, a hooked engage piece 59a extending forward is pivoted swingably vertically by a laterally horizontal cross pin 58, and a protruded engageable portion 59b is provided on the upper rear end side of the rear movable body 14. By engaging the engage piece 59a to the engageable portion 59b of the transport car 10 in the immediate front, the transport cars 10 can be coupled in train. The engage piece 59a is held at a fallen engage state by gravity or a spring.

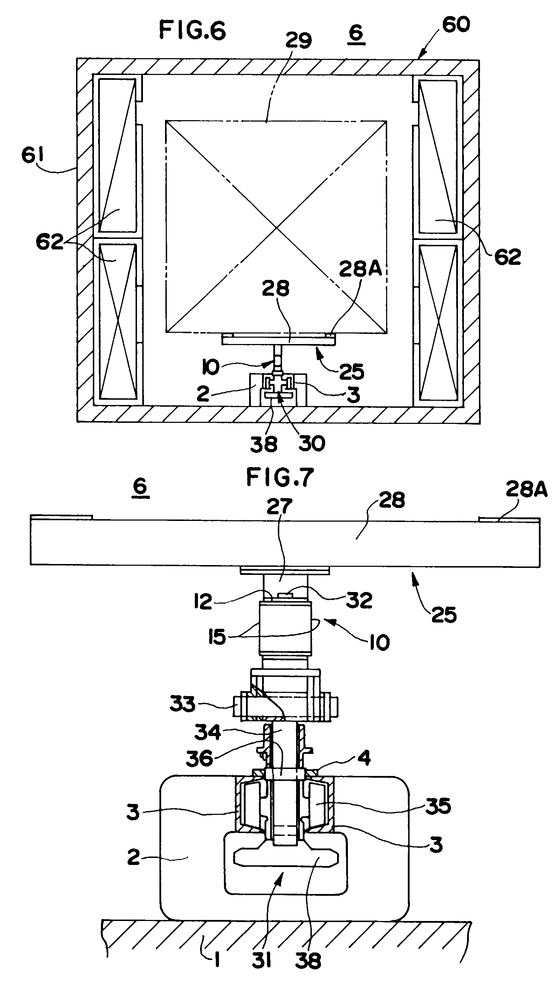

As shown in Fig. 6, Fig. 7 and Fig. 13, in the dense moving zone 6, a dry furnace 60 is provided from a slightly upper stream side of the ascending path 5a to a slightly downstream side of the descending path 5b. The dry furnace 60 is constituted by a rectangular cylindrical wall body 61 and dryers 62 arranged inside the wall body 61, the linear path 5A and the curved horizontal path 5B are disposed.

In the dense moving zone 6, at a slightly upper stream side from an inlet of the dry furnace 60, a friction feeder 70 which acts on the driven faces 15 on both side faces of the main body 11 of the transport car 10 to give propelling force to the transport car 10 is provided. The friction feeder 70 includes the movable bodies 12 to 14.

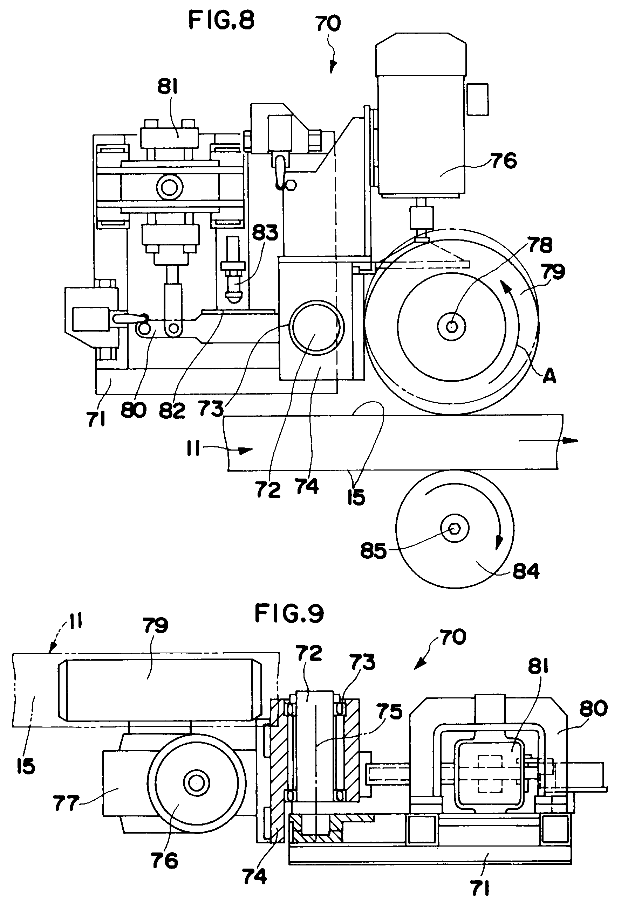

That is, as shown in Fig. 8 and Fig. 9, on the lateral side of the guide rails 3, a longitudinal shaft 72 is disposed on a base body 71 extending from the frame 2, and a support member 74 is mounted to the longitudinal shaft 72 swingably about a longitudinal axis 75 via bearings 73. A motor 76 and a reduction gear 77 are disposed on the support member 74, a friction feed roller 79 made of, for example, urethane is mounted to an output shaft 78 of the reduction gear 77, and the friction feed roller 79 is driven by the motor 76 via the reduction gear 77. An arm 80 is connected to the support member 74 and a cylinder unit 81 is interposed between the arm 80 and the base body 71.

Thus, by operating the cylinder unit 81, the support member 74 is swung bout the longitudinal axis 75 to move the friction feed roller 79 to and from the driven face 15 on one side of the main body 11 of the transport car 10. For the purpose of deciding a marginal approach of the friction feed roller 79 against the driven face 15 at that time, a contact member 82 is disposed on the support member 74 and a stopper 83 contacting with the contact member 82 is provided adjustably on the base body 71. Facing the friction feed roller 79, a counter roller 84 contacting to the other driven face 15 is disposed rotatably, only freely, via the longitudinal axis 85.

As shown in Fig. 13, in the dense moving zone 6, at a slightly downstream side from an outlet of the dry furnace 60, a friction brake 90 which acts on the driven face 15 of the main body 11 of the transport car 10 to give braking force to the transport car 10 is provided. Furthermore, at a slightly upper stream side of the friction feeder 70, feed-in means 95 is disposed, and at slightly downstream side of the friction brake 90, feed-out means 96 is disposed. Arrangement patterns of the means 70, 90, 95 and 96 are changed variously, and the friction brake 90, feed-in means 95 and feed-out means 95 may be omitted partly or entirely.

The friction brake 90 is constructed as same as the friction feeder 70, and is constituted by, a friction brake roller 91 which is made of, for example, urethane and contacts to and separates from the driven face 15 on one side of the main body 11 of the transport car 10, to torque motor 92 which gives a reverse rotating force B to the friction brake roller 91 and a counter roller 93 to which the other driven face 15 is contacted. The reverse rotating force B given by the torque motor 92 is set smaller than a feed rotating force A of the motor 76 of the friction feeder 70. The feed-in means 95 and the feed-out means 96 are also constructed as same as the friction feeder 70.

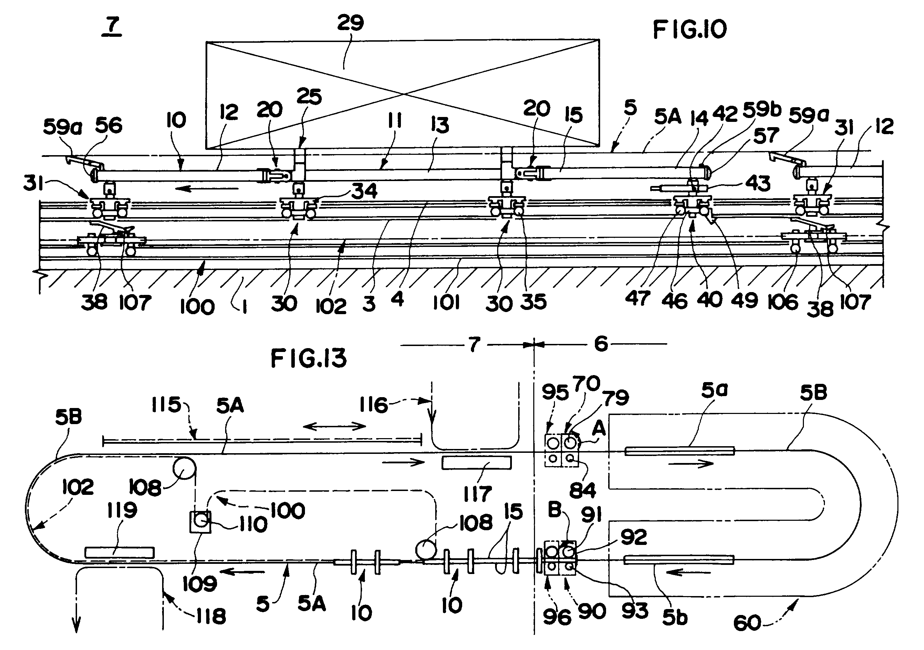

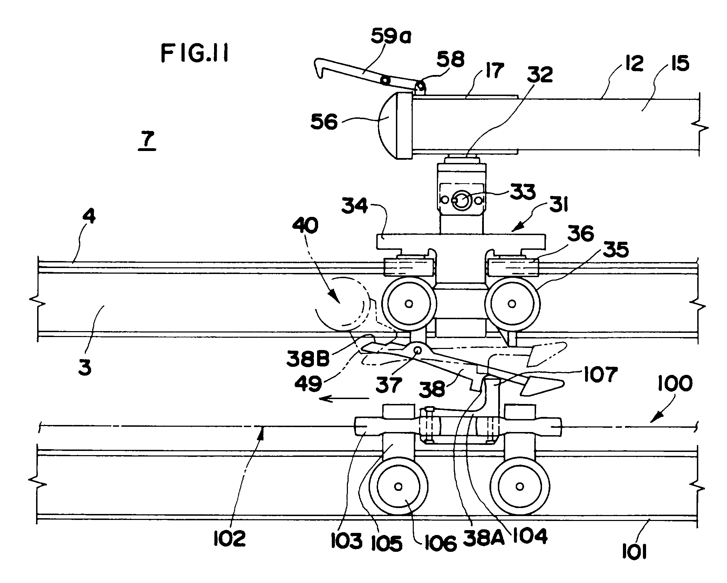

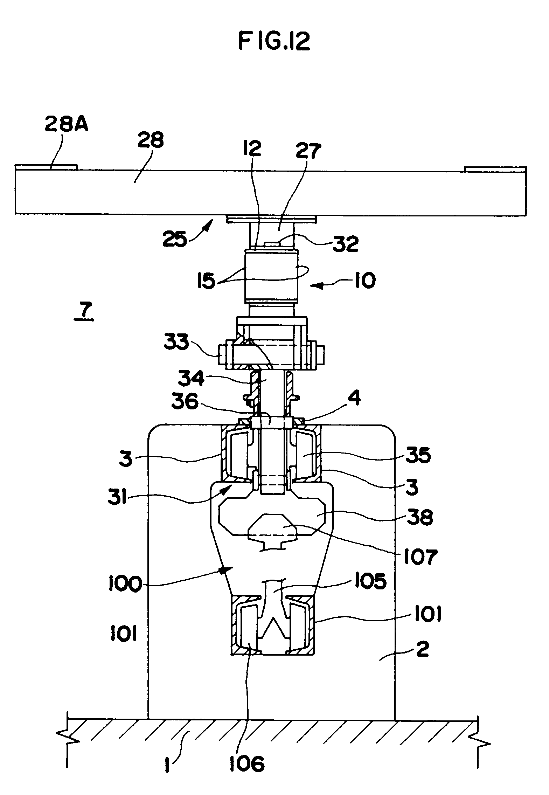

In Fig. 10 through Fig. 13, in a path from the vicinity of the starting end to an exit of the curved horizontal path 5B in the expanded moving zone 7, a disengageable feeder 100 having a pusher 107 which is engageable to and disengageable from the driven unit 38 of the transport car 10 is provided. That is, under the guide rails 3, a pair of right and left channel guide rails 101 are supported by the frame 2 as facing their open portions one another.

The pusher 107 is constituted upward in a body from one of side links 103 constituting a drive chain 102, and on front and rear center links 103 of the side link with pusher 103, a trolley 105 provided with a pair of right and left supporting horizontal shaft rollers 106 engaging to the guide rails 101 is mounted. The drive chain 102 is stretched endlessly between a plurality of guide gears 108 and a drive gear 110 coupled to and interlocking with a motor unit 109.

In a path from the exit of the curved path 5B to the vicinity of end portion in the expanded moving zone 7, a high-speed feeder 115 which drives the transport cars 10 at high speed is disposed. As the high-speed feeder 115, for example, a reciprocating self-propelled tram-car type may be adopted.

On the upper stream side of the feed-in means 95 in the dense moving zone 6, carry-in means 116 from the preceding process and transfer means 117 for transferring the objects being conveyed 29 between the carry-in means 116 and the transport car 10 are disposed. At an inlet of the curved path 5B in the expanded moving zone 7, carry-out means 118 to the following process and transfer means 119 for transferring the objects being conveyed 29 between the carry-means 118 and the transport car 10 are disposed.

Next, an example of conveying method by the transport car 10 in the above-mentioned embodiment is described.

In Fig. 13, the transport car 10 is stopped in such a manner that its front end corresponds to the position of the feed-in means 95, and the objects being conveyed 29 which is, for example, painted in the preceding process and carried in by the carry-in means 116 is transferred to the support for objects being conveyed 25 of the transport car 10 by the transfer means 117.

By operating the feed-in means 95 as same as the friction feeder 70 in this state, the transport car 10 loaded with the objects being conveyed 29 is fed out toward the friction feeder 70. At this time, the front contact end 56 of the transport car 10 fed by the feed-in means 95 contacts to the rear contact end 57 of the rearmost transport car 10 of the group of transport cars 10 connected in train in a row on the conveyor path 5, thereby the group of transport cars 10 are moved forward by feed-in force of the feed-in means 95. The feed-in means 95 stops to feed when the front end of the corresponding transport car 10 enters the friction feeder 70. At this time, the cylinder unit 81 in the friction feeder 70 is extended, thereby the support member 74 is swung outward about the longitudinal axis 75 to disconnect the friction feed roller 79 from a moving locus of the driven face 15 of the transport car 10 as shown by a virtual line of Fig. 8. Thus, the transport car 10 is fed in without any hindrances.

Thereafter, the cylinder unit 81 is contracted to move and press the friction feed rollers 79 against the driven face 15 on one side of the transport car 10 as shown by a solid line of Fig. 8, and at the same time, the other driven face 15 is contacted to the counter roller 84 so as to clamp the front movable body 12 by the rollers 79 and 84, but at this time, the friction feed rollers 79 is rotated in the feed direction by the motor 76. Thus, the transport car 10 is driven forward by feed rotating force A of the friction feed rollers 79 to push and move the group of transport cars 10 which are connected in train in a row on the conveying path 5 in the dense moving zone 6.

At this time, the guidance means 30, 31 and 40 of the transport cars 10 engaged to the guide rails 3 are that, the moving level and moving direction are restricted by the supporting horizontal shaft rollers 35, 47 and steady-rest vertical shaft rollers 36, 48, thus the transport cars 10 can be driven smoothly as maintaining a prescribed attitude.

A feed amount of the transport car 10 by the friction feeder 70 is detected by an encoder and the like, and when a preset feed amount is achieved, the friction feed rollers 79 is disconnected from the driven face 15 of the transport car 10 by the cylinder unit 81 to stop automatically. Meanwhile, the transport car 10 moving on the conveying path 5 is braked by the friction brake 90. That is, while the propelling operation of the transport car 10 by the friction feeder 70 is stopped, though the cylinder unit in the friction brake 90 is contracted and the friction brake roller 91 is disconnected from the driven face 15 of the transport car 10, when the friction feeder 70 starts the propelling operation, the friction brake roller 91 is moved toward the driven face 15 by the cylinder unit and is pressed against the driven face 15 of the transport car 10 being pushed and driven.

At this time, since the friction brake roller 91 is rotated in the reverse feed direction by the torque motor 92, though the backward propelling force is exerted on the transport car 10 by the reverse rotating force B, as the feed rotating force A is larger than the reverse rotating force B, the friction brake roller 91 is rotated in the feed direction corresponding to a difference therebetween, and the load at that time is absorbed by the torque motor 92.

By the above-mentioned operation, the transport car 10 corresponding to the friction brake 90 is pushed and driven in the braking state, so that between the friction feeder 70 and the friction brake 90, a plurality of transport cars 10 are aligned in close contact without producing any gaps therebetween. The braking operation by the friction brake 90 is stopped automatically in connection with stop of the propelling operation by the friction feeder 70. Then, the transport car 10 pushed and driven from the friction brake 90 reaches the feed-out means 96.

The transport car 10 is intermittently moved at a prescribed speed in the dense moving zone 6 in such a manner, and passes through the dry furnace 60 as shown in Fig. 6 while moving intermittently, thereby the painted objects being conveyed 29 is dried. Hereupon, since the objects being conveyed 29 is conveyed through the dry furnace 60 by the friction feeder 70, the guide rails 3 may be laid close to the floor to lower a height including the transport car 10 and to minimize a space inside the dry furnace 60.

The propelling operation of the transport car 10 by the friction feeder 70 is performed by acting, in order, the friction feed rollers 79 from the driven face 15 of the front movable body 12 to the driven face 15 of the center movable body 13 and to the driven face 15 of the rear movable body 14.

As shown in Fig. 2, in the linear path 5A, since the main body 11 of the transport cars 10, or the movable bodies 12, 13 and 14 are in a bar-shaped attitude when viewing from above and side, the front contact end 56 contacts to the rear contact end 57 from right behind, thus it can be pushed and driven smoothly and reliably.

Also, in the curved horizontal path 5B, as shown in Fig. 14, when viewing from above, the movable bodies 12, 13 and 14 are pushed and driven in the attitude bending along the curve at the coupling means 20. THus, when viewing from above, a relative angle &H1 between the rear movable body 14 of the preceding transport car 10 and the front movable body 12 of the following transport car 10 is obtuse, and the front contact end 56 contacts to the rear contact end 57 at an obtuse angle for push and drive. At the coupling means 20, bending between the movable bodies 12, 13 and 14 is performed by swinging about the longitudinal pin 23. Meanwhile, since the guidance means 30, 31 are horizontally swingable about the vertical pin 32, and the guidance means 40 is horizontally swingable about the longitudinal pin 45, they are directed automatically along the horizontal curve of the guide rails 3.

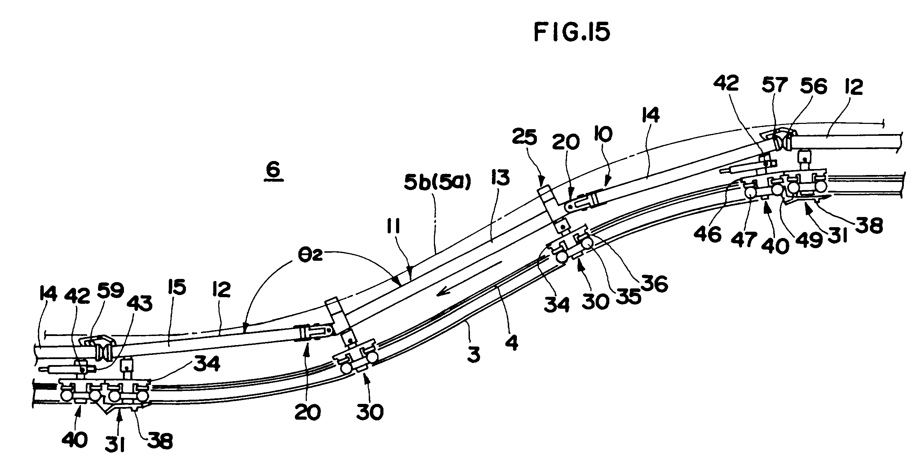

Also in the case of running on the ascending path 5a and descending path 5b, as shown in Fig. 15, when viewing from the side, a relative angle θ2 between the rear movable body 14 of the preceding transport car 10 and the front movable body 12 of the following transport car 10 is obtuse, and front contact end 56 contacts to the rear contact end 57 at an obtuse angle for push and drive. At this time, at the coupling means 20, bending between the movable bodies 12, 13 and 14 is performed by swinging about the cross pin 21. Meanwhile, since the guidance means 30, 31 are vertically swingable about the laterally horizontal pin 33, and the guidance means 40 is swingable vertically about the axis 42A of the laterally horizontal pin 42, they are directed automatically along the the vertical curve of the guide rails 3.

At the end portion of the ascending path 5a and the start end of the descending path 5b, by the aforementioned relative angle θ2, the trolley body 34 of the guidance means 31 in the front movable body 12 of the following transport car 10 contacts to the trolley body 46 of the guidance means 40 in the rear movable body 14 of the preceding transport car 10, and the front contact end 56 does not contact to the rear contact end 57.

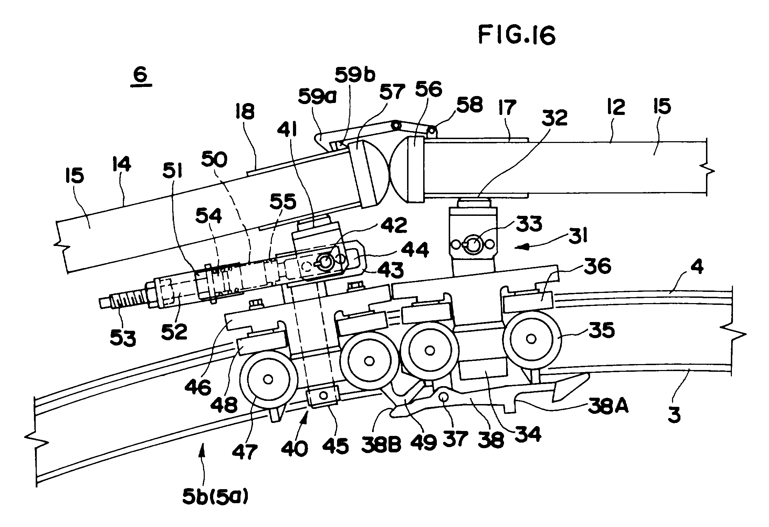

However, as shown in Fig. 16, by biasing force between the trolley bodies 46, 34 at this time, the front-to-rear movable body 43 swings about the laterally horizontal pin 42 (the laterally horizontal axis 42A) relative to the bracket 41 and moves forward against urging force of the spring 50, as a result, the guidance means 40 of the rear movable body 14 moves forward relatively, thereby, though the trolley bodies 46, 34 are contacted one another, an actual push force is transmitted reliably from the following transport car 10 to the preceding transport car 10 by the mutual contact between the contacts 57 and 56.

When the rear movable body 14 of the preceding transport car 10 and the front movable body 12 of the following transport car 10 become horizontal after moving into the horizontal path, the front-to-rear movable body 43 returns backward by the urging force of the spring 50. The front-to-rear movable body 43 moves within a front-to-rear free moving range of the laterally horizontal pin 40 in the front-to-rear long hole 44.

The transport car 10 reaching the feed-out means 96 as above-mentioned is fed to the expanded moving zone 7 by the feed-out means 96. In the expanded moving zone 7, as shown in Fig. 10 through Fig. 13, the drive chain 102 of the disengageable feeder 100 is driven by the motor unit 109, and the pushers 107 provided at a prescribed pitch are engaged to the driven unit 38 of the transport car 10 fed into the expanded moving zone 7. Thereby, the transport cars 10 are expanded at a prescribed pitch and moved at a constant speed in the expanded moving zone 7 by the pushers 107.

When the preceding transport car 10 is stopped by a stopper disposed at any location in the expanded moving zone 7, the operable face 38B of the driven unit 38 of the following transport car 10 runs over the drive-release operating unit 49 of the preceding transport car 10 to cause the driven unit 38 to swing in such a manner that the rear end side rises to disengage the engage face 38A of the driven unit 38 from the pusher 107. Thereby, on the upper stream side from the stopper, the following transport cars 10 can be stopped in order for storage.

By stopping the transport car 10 at the carry-out means 118, the objects being conveyed 29 on the transport car 10 can be transferred to the carry-out means 118 by the transfer means 119. The empty transport car 10 is again driven to the exist of the curved horizontal path 5B by the disengageable feeder 100. Then, the high-speed feeder 115 is acted on the transport car 10 and the empty transport car 10 is fed at high-speed to the dense moving zone 6 and stopped after reaching the feed-in means 95.

In the expanded moving zone 7, by engaging the front engage piece 59a of the following transport car 10 to the rear engageable portion 59b of the preceding transport car 10, the group of transport cars 10 can be connected in train, and by acting the disengageable feeder 100 and high-speed feeder 115 on the front transport car 10 in such a state, the group of transport cars 10 can be driven by traction. It is to be understood that, also in the conveying path where the transport car 10 is pushed and driven by the friction feeder 70, by connecting the transport cars 10 in train by the engage piece 59a and engageable portion 59b as aforementioned, the group of transport cars 10 on the upper stream side of the friction feeder 70 can be driven by traction, and the group of transport cars 10 on the downstream side of the friction feeder 70 can be pushed and driven.

Though the guidance means 40 of the rear movable body 14 is in the above-mentioned embodiment, the guidance means 31 of the front movable body 12 may be coupled variably to the front movable body 12, or the guidance means 31, 40 may be coupled variably to the movable bodies 12, 14.

Also, in the above-mentioned embodiment, though the driven unit 38 is constituted disengageably with the pusher 107, which may be constituted disengageably with the driven unit 38.

Furthermore, in the above-mentioned embodiment, though the main body 11 of the transport car 10 is constituted by three bar-shaped movable bodies 12, 13 and 14, the number of movable bodies constituting the main body 11 may be any numbers above two. In this case, the position of the movable body including the support for objects being conveyed 25 may be at the front, rear or any intermediate position of the main body 11.

The coupling means 20 is not restricted to those provided with the cross pin 21 on the center movable body 13 and the longitudinal pin 23 on the front and rear movable bodies 12, 14 as the above-mentioned embodiment. For example, the center movable body 13 may be provided with the longitudinal pin and the front and rear movable bodies 12, 14 may be provided with the cross pin, or they may be connected rotatably by means of ball joints.

The friction feeder 70, feed-in means 95, feed-out means 96 and friction brake 90 in the above-mentioned embodiment are that, though the friction feed rollers 79 and the friction brake rollers 91 are forced-drive rollers and the counter rollers 84, 93 are free-drive rollers, the latter may also by the forced-drive rollers. Furthermore, the counter rollers 84, 93 may also be constituted disengageably with the driven face 15 of the transport car 10.

Also, in this above-mentioned embodiment, though the guide rails 3, 101 are laid on the floor, they may be laid in a pit under the floor to lower the total height above the floor including the transport car 10.

### ( Second Embodiment )

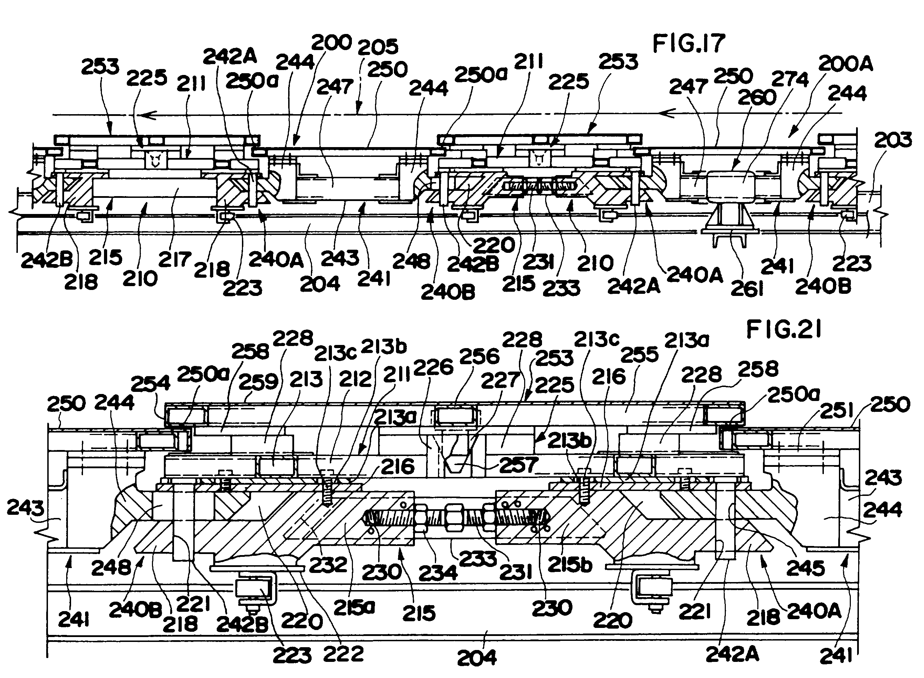

Next, a second embodiment of the present invention is described according to Fig. 17 through Fig. 25.

As shown in Fig. 17 through Fig. 19 and Fig. 25, a frame 202 is disposed on a floor in a pit 208 formed under a floor 201, a pair of right and left channel supporting guide rails 203 are laid via the frame 202 as facing their open portions outward, and between the supporting guide rails 203, steady-rest guide rails 204 consisting of the same channel steel are laid via the frame 202. By the guide rails 203, 204, an endless conveying path 205 consisting of, a pair of linear paths 205a which are parallel to each other and curved horizontal paths 205b connecting between start and end portions of the linear paths 205a, is formed.

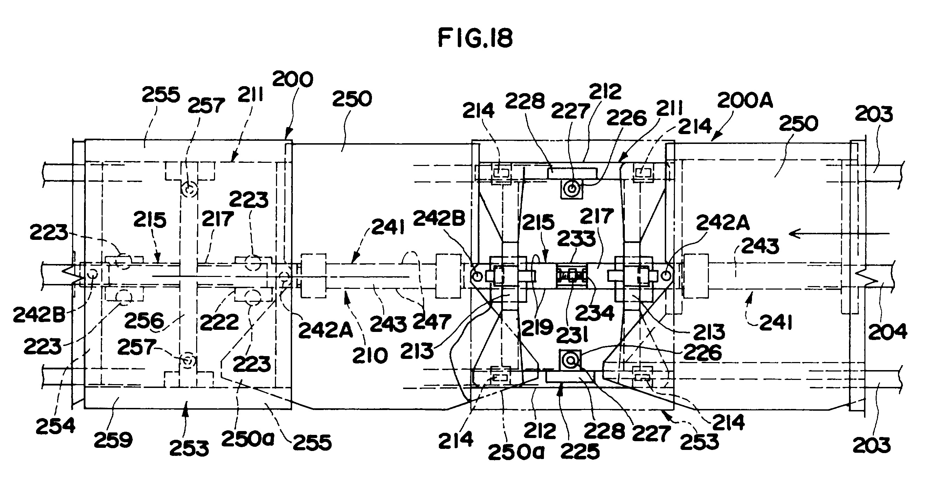

Numeral 200 designates a transport car supported and guided by the supporting guide rails 203 for movement on the conveying path 205, and as shown in Fig. 17 and Fig. 18, constituted by a main body 210, a support for objects being conveyed 253 and a work deck 250. The main body 210 is constituted by two bar-shaped movable bodies 215, 241 coupled by coupling means 240A. The transport cars 200 are connected in endless train by coupling means 240B.

The support for objects being conveyed 253 is disposed on a frame 211 supported on the front movable body 215 of the main body 210, and the work deck 250 is supported on the rear movable body 241 of the main body 210.

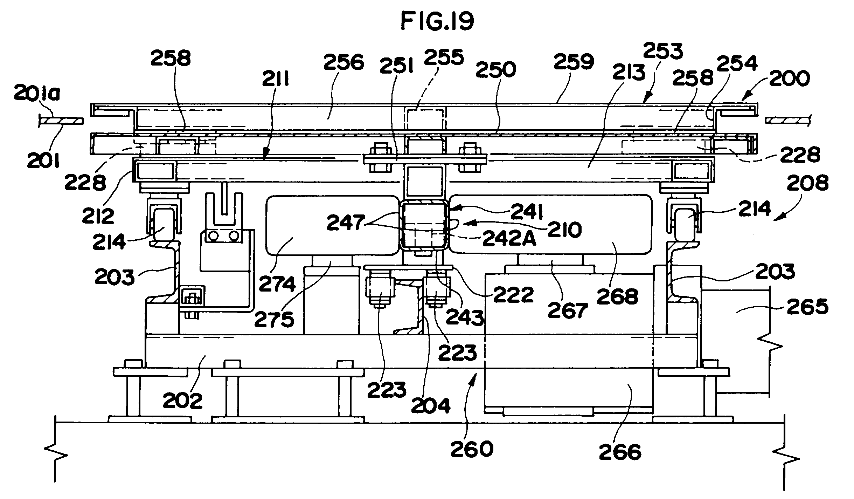

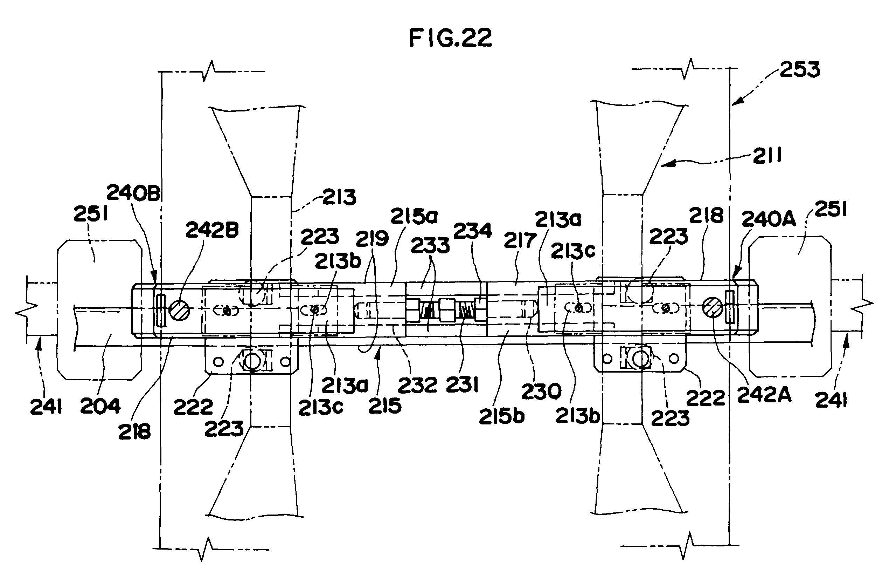

The frame 211 has a rectangular shape formed by a pair of right and left front-to-rear members 212 and a pair of front and rear right-to-left members 213, and at front and rear ends of the front-t-rear members 212, free wheels 214 rolling on the supporting guide rails 203 are disposed. As shown in Fig. 21, above the frame 211, support supporting means 225 for positioning and supporting the support for objects being conveyed 253 from above is disposed. The support means 225 is fixed inside a center portion of the pair of right and left front-to-rear members 212 of the frame 211, and constituted by a pair of right and left blocks 225 including a vertical positioning hole 227 and receive members 228 fixed at plural locations on the pair of right and left front-to-rear members 212. As shown in Fig. 19, the frame 211 is so set that its upper surface is slightly below the floor surface 201a.

As shown in Fig. 17 through Fig. 19 and Fig. 21, the support for objects being conveyed 253 supported on the frame 211 is formed into a flat frame by a window frame-shaped outer frame 254, front-to-rear frames 255 right-to-left frames 256 disposed inside the outer frame 254, thereunder, a pair of right and left positioning pins 257 engageable to the positioning holes 227 of the support supporting means 225 from above are provided downward, and space plates 258 supported by the receive members 228 are provided. A flat plate 259 is disposed on the frames 254 to 256 as required.

The front movable body 215 is disposed under the frame 211 at its lateral center in parallel to the running direction, and is constituted by a main body 217 consisting of a square cylinder and connecting 218 formed on front and rear ends of the main body 217, right and left side faces thereof being formed into flat driven faces 219. Under the connections 218, steady-rest vertical shaft rollers 223 clamping the steady-rest guide rails 204 respectively from both sides at the front and rear portions are mounted via brackets 222.

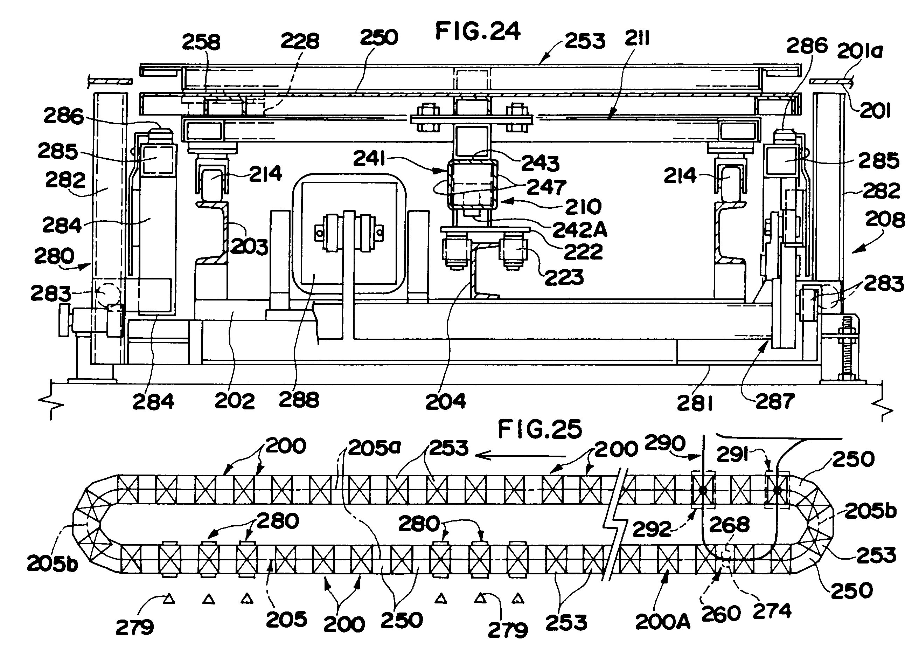

The rear movable body 241 supporting the work deck 250 is formed by a square cylindrical main body 243 and connections 244 disposed on front and rear ends of the main body 243, right and left side faces thereof being formed into flat driven faces 247. The work deck 250 is fixed to the upper side of the connection 244 at opposite ends of the rear movable body via a mounting plate 251 (refer to Fig. 21). The work deck 250 has a substantially same width as that of the support for object for objects being conveyed 253, and on one side positioned outside from the supporting guide rails 203 when running on the curved horizontal path 205b shown in Fig. 25, as shown in Fig. 18, a triangular protrusion deck 250a protruding toward front and rear sides is formed in a body. The protrusion deck 250a is disposed to position above the frame 211 under the support for objects being conveyed 253.

The coupling means 240A coupling the front movable body 215 and the rear movable body 241 is constituted by the adjoining connections 218, 244 of the movable bodies 215, 241, and a vertical longitudinal pin 242A connecting the connections 218, 244 swingably in the laterally horizontal direction.

The coupling means 240B coupling the transport cars 200 one another is constituted by the rear connection 244 of the rear movable body 241 in the front transport car 200, front connection 218 of the front movable body 215 in the rear transport car 200 and a vertical longitudinal pin 242B coupling the connections 218, 244 swingably in the laterally horizontal direction.

Though the many transport cars 200 constituted as mentioned above, the main body 210 of, at least, one of the transport car 200A among the transport cars 200 is constituted as such that a length in the running direction can be adjusted.

That is, as shown in Fig. 17, Fig. 18, Fig. 21 and Fig. 22, the front movable body 215 supporting the frame 211 in the main body 210 of the transport car 200A is divided into front and rear movable bodies 215a, 215b, which are respectively provided with concentric screw holes 230 in the front-to-rear direction on divided end faces thereof, and coupled adjustably lengthwise in the running direction by a screw shaft 231 whose inverse screw portions at opposite ends engage to the screw holes 231 and two lock nuts 234. On opposite sides of the movable bodies 215a, 215b, front-to-rear depressions 232 are formed, and between the front and rear depressions 232, a joint plate 233 for continuing the driven faces 219 is engaged and fixed. The joint plate 233 is fixed to one movable body 215b by means of a bis or the like, and mounted to the other movable body 215a via a bis and a front-to-rear long hole.

Since the length of the frame 211 supported by the movable body 215 whose length is adjustable is fixed, mounting plates 216 secured to the connections 218 at opposite ends of the movable body 215, and mounting plates 213a secured to the frame 211 as overlapping thereon are connected by long holes 213b provided in the mounting plates 213a in the running direction and bolts 213c extending through the long holes 213b and engaging to the mounting plates 216.

At least one of the coupling means 240B coupling the transport cars 200, 200A to form an endless train and the coupling means 240A coupling the front and rear movable bodies 215, 241 of the transport cars 200, 200A, in this embodiment, as shown in Fig. 17, Fig. 21 and Fig. 22, the coupling means 240B between the transport car 200A whose length of the main body 210 is constituted adjustably and the rear transport car 200 is constituted movably within a fixed range in the running direction.

That is, the connections 218 at opposite ends of the front movable body 215 supporting the support for objects being conveyed 253 (frame 211) of the transport cars 200, 200A include vertical pin holes 221 through which the longitudinal pins 242A, 242B are inserted, and at the same time, depressions 220 are formed between the mounting plates 216 secured on the connections 218, and further, the connections 244 at opposite ends of the rear movable body 241 supporting the work deck 250 of the transport cars 200, 200A are formed so as to be inserted into the depressions 220, and vertical pin holes 245, 248 communicating with the pin holes 221 are formed.

Now, though the longitudinal pins 242A, 242B inserted downward through the mounting plates 216 and supported by the mounting plates 216 at its head portions are to be inserted into the pin holes 221, 245 or pin holes 221, 248, at the coupling means 240B between the transport car 200A whose length of the main body 210 is adjustable and the front transport car 200, the pin hole 248 provided at the connection 244 is formed into a front-to-rear long hole as shown in Fig. 21.

As shown in Fig. 25, at a prescribed location in the conveying path 205, or at a location near the end portion of one linear path 205a, a friction feeder 260 which acts on the right and left driven faces 219, 247 of the main body 210 (front and rear movable bodies 215, 241) of the transport cars 200, 200A is disposed. As shown in Fig. 17, Fig. 19 and Fig. 20, the friction feeder 260 includes a friction feed roller 268, a motor 265 for driving the same and a cylinder unit 270 which moves the friction feed roller 268 to and from the driven faces 219, 247.

Particularly described, a longitudinal shaft 262 is erected on a base body 261 provided on the floor 201 on the lateral side of the supporting guide rails 203, and a support member 263 is supported by the longitudinal shaft 262 swingably about the longitudinal axis via a bearing 264. The motor 265 and a reduction gear 266 connected thereto in an interlocking fashion are mounted to the support member 263, and the friction feed roller 268 made of, for example, urethane is fixed to an output shaft 267 protruding upward from the reduction gear 266. An arm 269 extending outward is disposed in a body on the support member 263, and between the arm 269 and the base body 261, the cylinder unit 270 is interposed for swinging the support member 263. Rollers 271 supporting the support member 263 and an anti-floating roller 272 are pivoted on the base body 261.

Thus, by operating the cylinder unit 270, the support member 263 is swung about the longitudinal axis to move the friction feed roller 268 to and from the driven faces 219, 247 on one side. For the purpose of restricting the maximum and minimum approach of the friction feed roller 268 against the driven faces 219, 247 at this time, a limit-type detector 273 is provided. Facing the friction feed roller 268, a counter roller 274 for receiving the other driven faces 219, 247 is pivoted freely by a longitudinal shaft 275. As shown in Fig. 25, at a plurality of locations on the linear path 205a provided with the friction feeder 260, work stations 279 are provided and lifts 280 for lifting the support for objects being conveyed 253 from the transport cars 200, 200A are disposed on the work stations 279.

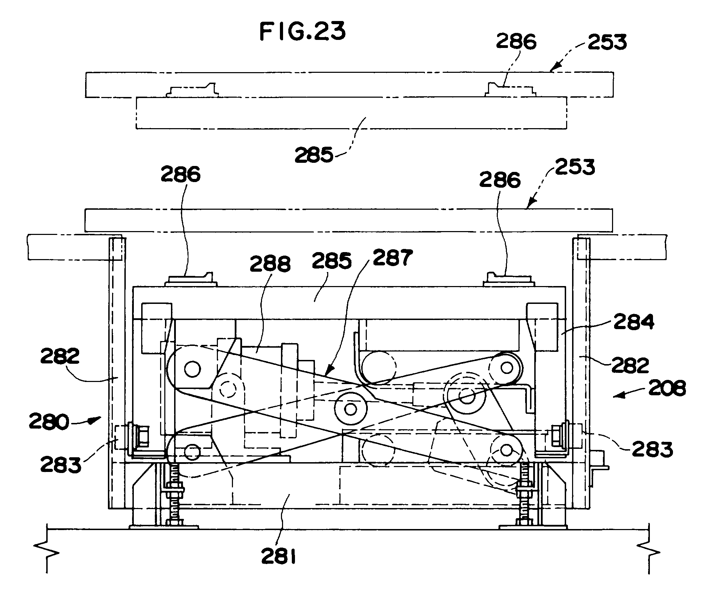

That is, as shown in Fig. 23 and Fig. 24, a flat frame 281 is disposed on the floor 201, and guide members 282 positioned outside the supporting guide rails 203 are erected from the four corners of the frame 281. Lift members 284 guided via rollers 283 are disposed on the guide members 282, and between upper ends of a pair of lift members 284 in the running direction among the lift members 284, lift girders 285 are disposed. Contact members 286 contacting freely to the support for objects being conveyed 253 from below are provided on the lift girders 285. For moving the lift girders 285 up and down, between the lower portion of the frame 281, pantograph mechanisms 287 are disposed and a cylinder unit 288 for operating the pantograph mechanisms 287 in synchronism is provided.

As shown in Fig. 25, in the conveying path 205, at an outlet of the curved horizontal path 205b after passing the friction feeder 260, a conveying path of a ceiling suspension conveyor 290 is disposed for intersection at two locations, the intersection near the curved horizontal path 205b being formed into a unloading portion 291 and the intersection apart from the curved horizontal path 205b being formed into a loading portion 292. As the suspension conveyor 290, those having a hanger provided on a self-driven truck and those having the hanger provided on a chain-driven trolley are adopted. At this time, it can be constituted as such that, an engage member on the hanger side is engaged to the support for objects being conveyed 253 to position the hanger.

Next, the operation of the second embodiment is described.

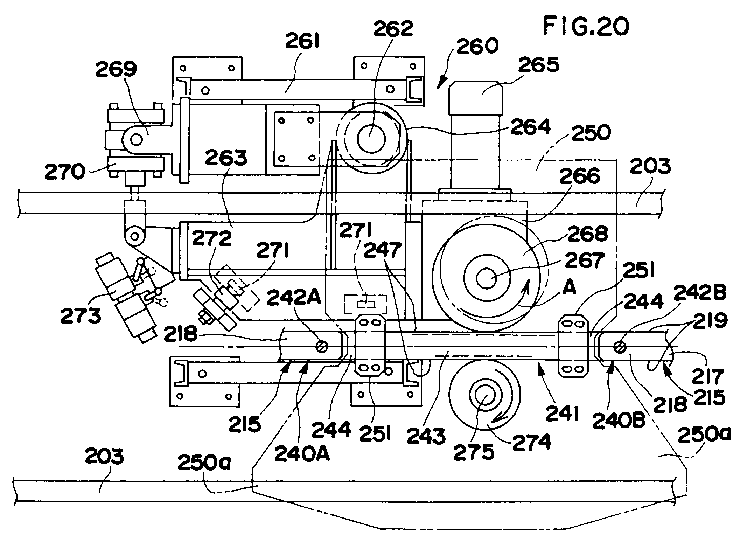

In the case of installing a conveying system using the transport cars 200, 200A, when the longitudinal pin 242B deviates in a front-to-rear direction from an approximate center of the long pin hole 248 in the coupling means 240B between the transport car 200A and the following transport car 200 shown in Fig. 20, due to an error in the total length of an endless train consisting of a plurality of transport cars 200, 200A, the length in the running direction of the main body 210 (front movable body 215) of the transport car 200A is adjusted to absorb the error.

That is, one side of the joint member 233 shown in Fig. 21 is removed and the screw shaft 231 is turned while loosening the bis fixing the other joint member 233 and the movable body 215a, thereby the front and rear movable bodies 215a, 215b are moved to and from each other in the running direction to adjust the total length of the movable body 210 (front movable body 215), and to adjust the longitudinal pin 242B at the coupling means 240B to position at an approximate center of the long pin hole 248. The screw shaft 231 is fixed by the lock nuts 234 after adjustment. Before adjusting the length of the front movable body 215, the bolts 213c connecting the mounting plate 216 on the side of movable bodies 215a, 215b and the mounting plate 213a on the side of frame 211 are loosened, and tightened after adjustment. At this time, the running direction of the front movable body 215 and the running direction of the support for objects being conveyed 253 are approximately centered.

The endless train consisting of a number of transport cars 200, 200A assembled and installed as mentioned above is operated as follows. That is, while the transport cars 200, 200A are standing still, the cylinder unit 270 in the friction feeder 260 is extended to swing the support member 263 outward about the longitudinal axis, thereby the friction feed roller 268 is separated from the driven faces 219, 247 as shown by a virtual line of Fig. 20.

When the endless train (transport cars 200, 200A) is driven, the cylinder unit 270 is contracted to move the friction feed roller 268 driven in the feeding direction by the motor 265 toward the moving path of the main body 210 (movable bodies 215, 241) of the transport cars 200, 200A so as to be pressed against one driven faces 219, 247, and to contact the other driven faces 219, 247 to the counter roller 274 as shown by solid lines in Fig. 20, thereby the movable bodies 215, 241 are clamped by the rollers 268, 274 to apply rotational propelling force in a prescribed direction to the endless train to drive the endless train or the transport cars 200, 200A connected in endless train at a prescribed speed on the conveying path 205.

In the state of driving the endless train (transport cars 200, 200A connected in endless train), the transport cars 200, 200A from the friction feeder 260 on the running direction side to the expansion coupling means 240B having the long pin hole 248 are pushed and driven via the longitudinal pins 242A, 242B of the coupling means 240A, 240B, and the transport cars 200, 200A from the expansion coupling means 240B having the long pin hole 248 to the friction feeder 260 are driven by traction via the longitudinal pins 242A, 242B of the coupling means 240A, 240B.

Now, since the endless train rotating the conveying path 205 is consisting of the front and rear movable bodies 215, 241 of the transport cars 200, 200A connected in chain by the longitudinal pins 242A, 242B of the coupling means 240A, 240B, against the conveying path 205 having the two semicircular curved horizontal paths 205b, by the change of number and position of the longitudinal pins 242A, 242B rotating the two curved horizontal paths 205b of the conveying path 205, the length of the endless train (a sum of distance between the longitudinal pins 242A, 242B9 rotating the curved horizontal paths 205b at opposite end portions fluctuates.

However, in the endless train (transport cars 200, 200A connected in endless train) of the above-mentioned embodiment, since an expansion allowing portion in the running direction is constituted by the expansion coupling means 240B having the long pin hole 248, by the front-to-rear relative movement of the longitudinal pin 242B in the long pin hole 248 in the coupling means 240B, the fluctuation of length of the endless train (a sum of distance between the longitudinal pins 242A, 242B) rotating the curved horizontal paths 205b is absorbed. Thus, an excessive tension is never exerted on the transport cars 200, 200A connected in endless train or an unreasonable slack never occurs.

The transport cars 200, 200A moving on the conveying path 205 are supported and guided on the supporting guide rails 203 via the swivel wheels 214, and by the steady-rest vertical shaft rollers 223 guided on the steady-rest guide rails 204, the transport cars 200, 200A are driven smoothly as being directed parallel to the conveying path 205.

A feed amount of the transport cars 200, 200A by the friction feeder 260 is detected by an encoder, and when reaching the set feed amount, the friction feed roller 268 is disconnected from the driven faces 219, 247 to stop the transport cars. Hereupon, the feed amount is set to stop the transport cars 200, 200A at the work stations 279, and by stopping the transport cars 200, 200A, the contact members 286 of the lift girders 285 positioned at the lowermost position of the lift 280 face under side of the four corners of the support for objects being conveyed 253.

In this state, the operator at the work station 279 operates, for example, a switch to actuate the lift 280. That is, the cylinder unit 288 is actuated to ascend the lift members 284 via the pantograph mechanisms 287, and the contact members 286 support the four corners of support for objects being conveyed 263 from below to lift it to a prescribed height as shown by a virtual line in Fig. 23. In the state where the support for objects being conveyed 253 and the objects being conveyed placed thereon are lifted in such a manner, various works are carried out on the objects being conveyed by the operator. When the prescribed works are completed, the operator turns on the switch to operate the lift 280 reversely, thereby the lift members 284 are descended and the support for objects being conveyed 253 is returned onto the transport cars 200, 200A.

Various works for the objects being conveyed on the support for objects being conveyed 253 are also carried out by the operator on the work deck 250. That is, the operator steps onto the work deck 250 from the floor 201a to carry out the various works for the objects being conveyed while the transport cars 200, 200A are standing still or moving.

When the transport cars 200, 200A move on the curved horizontal paths 205b, the protrusion deck 250a in the work deck 250 of the transport cars 200, 200A is drawn out from between the adjoining supports for objects being conveyed 253 and the frame 211, and a portion on the rotating center side of the work deck 250 advances into between the adjoining supports for objects being conveyed 253 and the frame 211. Thereby, even at the curved horizontal paths 205b, between the supports for objects being conveyed 253 is filled by the work deck 250, eliminating a dangerous gap. It is to be understood that, there is no problem of collision between the work deck 250 and the support for objects being conveyed 253.

The transport cars 200, 200A can also be stopped automatically at the unloading portion 291 and loading portion 292. Thus, in the state where the transport cars 200, 200A supporting the objects being conveyed after the prescribed works are stopped at the unloading portion 291, the objects being conveyed can be lifted by the suspension conveyor 290 together with the support for objects being conveyed 253 and transferred to the next process. When the transport cars 200, 200A emptied as above-mentioned are stopped at the loading portion 292, the objects being conveyed transferred from the preceding process by the suspension conveyor 290 can be loaded onto the frame 211 of the transport cars 200, 200A together with the support for objects being conveyed 253.

In the above-mentioned embodiment, though the support for objects being conveyed 253 aligned in series in the front-to-rear direction and the work deck 250 are provided on the transport cars 200, 200A, the work deck 250 may be deleted. Also, though the main body 210 is constituted by the front and rear movable bodies 215, 241, the number of movable bodies may be three or more. It is to be understood that, in this case, the support for objects being conveyed 253 can be supported by any movable body among the front, rear and intermediate movable bodies. It is also possible to lay the supporting guide rails 203 and steady-rest guide rails 204 on the floor 201a without using the pit 208.

In either of the aforementioned embodiments, it is also possible to constitute as such that, the guide rails supporting and guiding the transport cars is provided on the ceiling side, the transport cars are suspended from the guide rails so as to fun thereunder, and the support for objects being conveyed (support) is suspended underneath the transport car.

Though the driven faces provided on the main body (movable bodies) of the transport car are made flat and the friction feed roller is used as feed rollers of the feeder, the driven faces may be constituted by disposing a rack gear or chain in parallel to the running direction to utilize a pinion gear or a tooth wheel driven by a motor as the feed rollers.

### ( Third Embodiment )

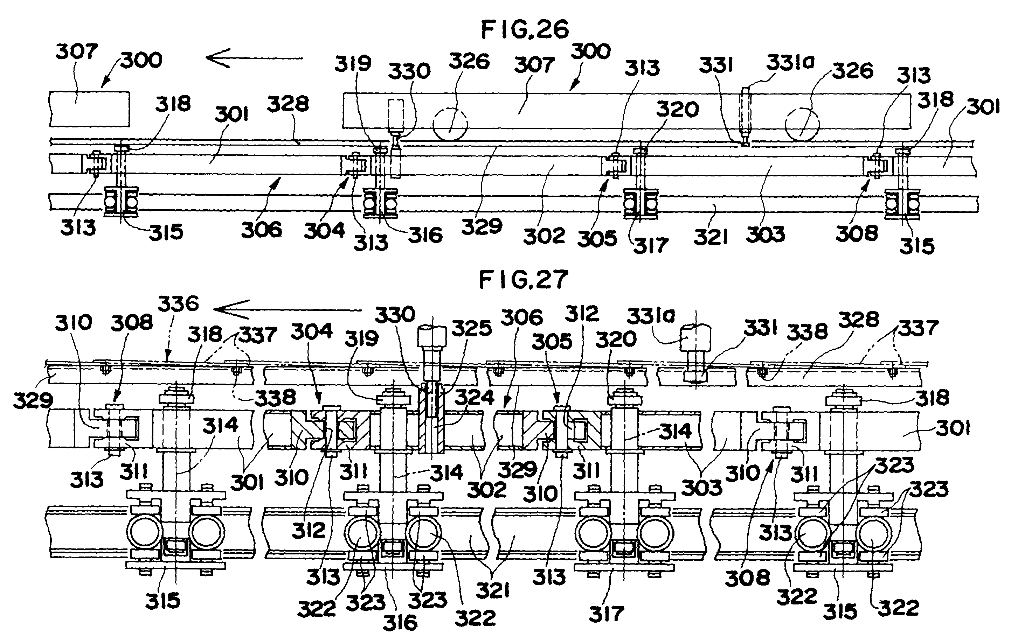

Next, a third embodiment of the present invention is described according to Fig. 26 through Fig. 30.

In the third embodiment, transport cars 300 are constituted by a main body 306 consisting of three square-bar-shaped movable bodies 301 to 303 coupled by coupling means 304, 305 and a truck-type moving car for support for objects being conveyed 307 which is disengageable from the main body 306, the front-to-rear adjoining transport cars 300 being connected one another by coupling means 308. Thus, the transport cars 300 of the present embodiment are also connected in endless train as same as those of the second embodiment.

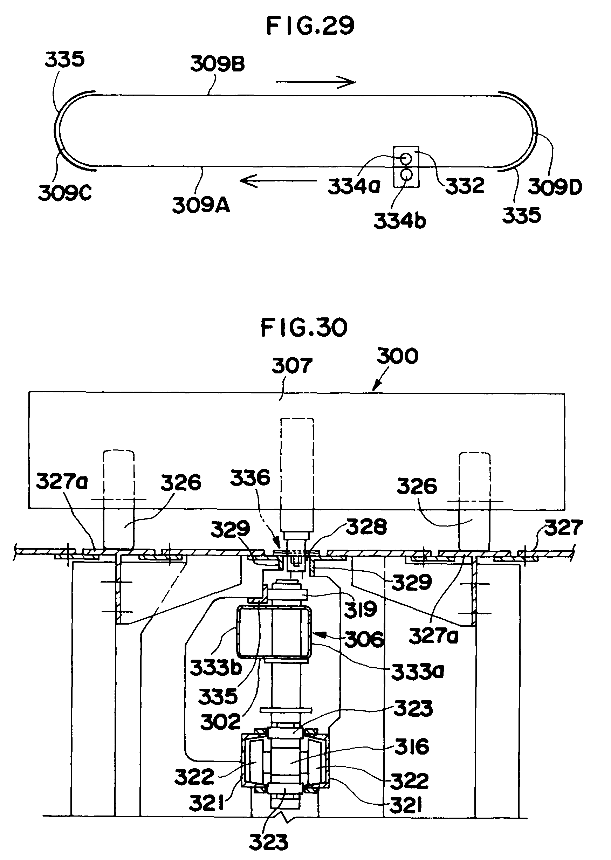

The coupling means 304, 305 constituting the transport car 300 are the coupling means 308 connecting the transport cars 300 are constructed similarly, and in this embodiment, as same as a layout of the conveying path of the second embodiment (refer to Fig. 25), since the transport cars 300 run on an elliptic endless conveying path including linear paths 309A, 309B, which are parallel to each other, and curved horizontal U-turn portions 309C, 309D connecting opposite ends of the linear paths 309A, 309B as shown in Fig. 29, the coupling means 304, 305 and 308, as shown in Fig. 27, couple the front and rear square-bar-shaped movable bodies swingably horizontally, by connecting male members 310 disposed on rear ends of the square-bar-shaped bodies 301 to 303 and female members 311 disposed on front ends of the square-bar-shaped movable bodies 301 to 303, by vertical coupling pins 313 fixed to the female members 311 are extending through pin holes 312 of the male members 310. The coupling means 305 coupling the center square-bar-shaped movable body 302 and the rear square-bar-shaped movable body 303 is designed to absorb an error between the total length of the elliptic endless conveying path shown in Fig. 29 and the total length of the transport cars 300 connected in endless train, by the pin hole 312 which is long in a lengthwise direction of the square-bar-shaped movable body 302 and through which the coupling pin 313 is extended.

Under and near the front end of the square-bar-shaped movable bodies 301 to 303, trolleys 315 to 317 as guidance means are mounted only rotatably about vertical axes 314, and above and near the front end of the square-bar-shaped movable bodies 301 to 303, guide rollers 318 to 320 are pivoted only rotatably about the vertical axes 314. The trolleys 315 to 318 are supported movably on a pair of right and left guide rails 321 laid along the elliptic endless conveying path, and include supporting horizontal shaft wheels 322 pivoted at front-to-rear symmetrical positions of the vertical axes 314 and engaged to the pair of right and left guide rails 321, and steady-rest vertical shaft rollers 323 pivoted at front-to-rear symmetrical positions of the vertical axes 314 and positioned between the pair of right and left guide rails 321.

Meanwhile, a cylindrical member 325 including a vertical pin hole 324 is secured at the position immediately after the guide roller 319 of the center square-bar-shaped movable body 302.

The truck-type moving car for support objects being conveyed 307 includes a pair of right and left swivel wheels 326 near front and rear ends thereof and runs freely on a floor face 327. Now, the guide rails 321 are laid at a suitable height under the floor face 327 so that the main body 306 of the transport cars 300 connected in endless train can run under the floor face 327, whereon guide slits 328 are formed by a pair of right and left rail members 329 secured thereto in such a manner that, a moving locus of the pin hole 324 comes right above when the main body 306 of the transport cars 300 connected in endless train moves along the elliptic endless conveying path shown in Fig. 29. Numeral 327a designates a pair of right and left flat rail members laid on the same level as the floor face 327 at positions wherein swivel wheels 326 of the moving car for support for objects being conveyed 307 rotate.

On the moving car for support for objects being conveyed 307 of the transport cars 300, a coupling pin 330 which is movable up and down is provided at a lateral center near the front end, and a vertical pivot 331a which is movable up and down and includes a guide roller 331, which is rotatably about a vertical axis, at the lower end is provided at a lateral center near the rear end.

When moved downward, the coupling pin 330 protrudes below the floor face via the guide slit 328 of the floor face 327, and engages to the pin hole 324 of the main body 306 of the transport cars 300. At this time, the coupling pin 330 never contacts to the rail members 329 on both sides of the guide slit 328. When moved downward, the guide roller 331 engages freely to the guide slit 328 of the floor face 327. At this time, the guide roller 331 contacts to and rotates along either of the rail members 329 on both sides of the guide slit 328 to prevent the rear-end portion of the moving car for support for objects being conveyed 307 from swinging to both sides.

As shown in Fig. 29, a feeder 332 is disposed at a suitable location of the elliptic endless conveying path, for example, near the start end of one linear path 209A. The feeder 332 includes, a pair of friction feed rollers 334a, 334b pressed against both sides of flat vertical driven faces 33a, 333b, continued in the running direction, and formed by both side faces of the main body 306 of the transport cars 300, or both side faces of the square-bar-shaped movable bodies 301 to 303 and coupling means 304, 305 constituting the main body 306 and the coupling means 308 coupling the main bodies 306. The pair of friction feed rollers 334a, 334b are both driven by a motor and are pressed against the driven faces 33a, 333b by a cylinder unit.

According to the above-mentioned configuration, when assembling, after assembling the portions under the floor face 327, the coupling pin 330 of the moving car for support for objects being conveyed 307 placed on the floor face 327 is descended through the guide slit 328 and engaged to the pin hole 324 in the main body 306 of the transport cars 300, thereafter, the vertical pivot 331a is descended to engage the guide roller 331 to the guide slit 328. By operating reversely, the moving car for support for objects being conveyed 307 on the floor face 327 of the transport cars 300 can be disconnected from the main body 306 under the floor face 327 and removed from the conveying path for repairs or the like.

In use, by driving the motor as pressing the pair of friction feed rollers 334a, 334b of the feeder 332 against the driven faces 333a, 333b on both sides of the main body 306 of the transport cars 300, the main body 306 of the transport cars 300 connected in endless train can be rotated along the elliptic endless conveying path shown in Fig. 29. At this time, the moving car for support for objects being conveyed 307 coupled to the main body 306 of the transport cars 300 via the pin hole 324 and coupling pin 330 runs on the floor face 327.

The moving car for support for objects being conveyed 307 of the transport cars 300 running on the floor face 327 is driven at stable attitude without moving in an serpentine fashion, because a moving path of the position of coupling pin 330 on the front-end side in decided by the pin hole 324 of the main body 306 guided by and running on the guide rails 321 under the floor face 327, and a moving path of the position of guide roller 331 on the rear-end side is decided by the guide slit 328 in the floor face 327 to which the guide roller 31 is engaged.

When the transport car 300 rotates at the curved horizontal U-turn portions 309C, 309D, the square-bar-shaped movable bodies 301 to 303 tend to slant outward from the U-turn portions 309C, 309D against the trolleys 315 to 317 positioned thereunder, by a centrifugal force exerted on the moving car for support for objects being conveyed 307. Thus, as shown in Fig. 29 and Fig. 30, circular guide rails 305 are disposed outside a rotating locus of the guide rollers 318 to 320 pivoted above and near the front end of the square-bar-shaped movable bodies 301 to 303 and rotating along the U-turn portions 309C, 309D to prevent such inconvenient phenomena.

It is to be understood that, also in the linear conveying paths 309A, 309B, it is possible to dispose the guide rails so as to clamp the guide rollers 318 to 320 from both sides.

In the U-turn portions 309C, 309D, since the position of coupling pin 330 (the position of pin hole 324) on the side of moving car for support for objects being conveyed 307 is spaced backward from the vertical axis 314 which is rotating center of the trolley 316, a rotating locus of the coupling pin 330 is shifted inward from a rotating locus of the trolley 316 (a rotating locus of the vertical axis314). Thus, as shown in Fig. 30, at the U-turn portions 309C, 309D, the guide slit 328 is formed to shift inward from the rotating locus of the trolley 316 (rotating locus of the vertical axis 314).

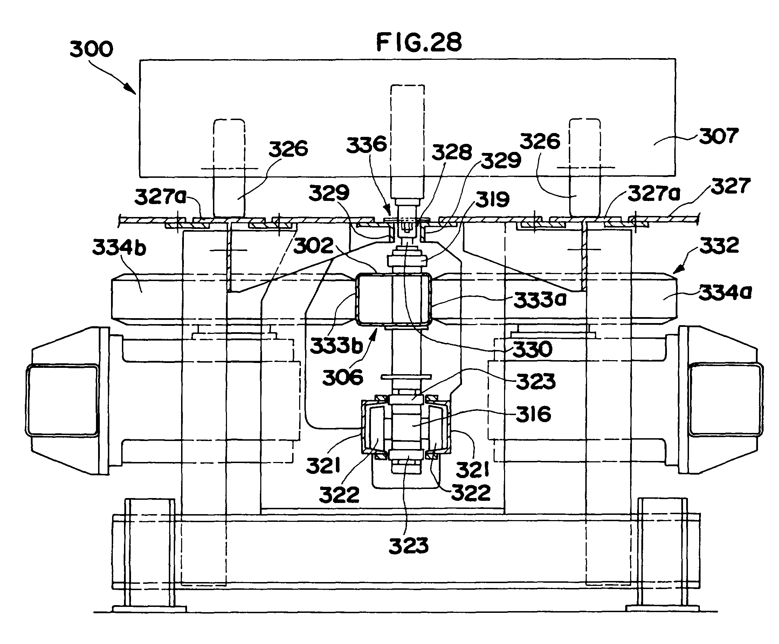

Also, as shown by a virtual line in Fig. 27 and Fig. 28, a slit cover 336 covering the guide slit 328 can be used together. The slit cover 336 is consisting of band plates 337 having a fixed length connected in chain by means of vertical shafts 338, both sides of which are placed slidably on the pair of right and left rail members 329 forming the guide slit 328, and at locations, where the coupling pin 330 and the vertical pivot 331a having the guide roller 331 on the side of moving car for support for objects being conveyed 307 extend through, includes through holes having a diameter through which the coupling pin 330 and the guide roller 331 can be drawn out upward.

Thus, when the moving car for support for objects being conveyed 307 is pulled by the main body 306 via the coupling pin 330, the slit cover 336 is also pulled by the coupling pin 330 and covers the guide slit 328 as moving thereon in a body with the moving car for support for objects being conveyed 307.

Meanwhile, though three typical embodiments, the first to third embodiments, have been described, the other embodiments can also be constituted by combining characteristic configurations of the three embodiments.

## Claims

1. A conveying system comprising: guide rails (3) disposed along a conveying path (5) having curve sections (5B), transport cars (10) supported movably by said guide rails (3), and a friction feeder (70) for the transport cars, wherein said transport cars (10) comprise a main body (11) supported onto said guide rails movably by guidance means (30, 31, 40) and a support (25) for objects to be conveyed, and said feeder (70) is disposed at a suitable location in said conveying path (5) and comprises a feed roller (79) and a motor (76) for driving the feed roller; characterized in that said main body (11) of the transport car (10) has a plurality of movable bodies (12, 13, 14) in the running direction, coupling means (20) for coupling the movable bodies so as to allow a relative yielding motion between the movable bodies at the curve sections (5B) in the conveying path, and driven faces (15) formed on the movable bodies (12, 13, 14) in parallel to the running direction, and said support (25) for objects to be conveyed is provided on, at least, one of said movable bodies (12, 13, 14), and said feed roller (79) of the feeder (70) is adapted to act on the driven faces (15) of said movable bodies.

2. A conveying system in accordance with claim 1, wherein front and rear ends of the main body (11) of the transport cars (10) are provided with a contact portion (56, 57) adapted to contact one another when the preceding transport car is pushed by the following transport car.

3. A conveying system in accordance with claim 1 or 2, wherein, in the conveying path (5), there are provided a zone (6) in which the transport car (10) is driven by said feeder (70), and further a zone (7) in which the transport car is forcibly driven by disengageable feeder (100), wherein said disengageable feeder (100) comprises a driven body (38) disposed at a front-end portion of the main body (11) of the transport car, drive-release operating means (49) disposed at a rear-end portion of the main body (11), a pusher (107) moving along the conveying path (5) and engaged to said driven body (38), and said driven body and said pusher (107) are disengageable from each other so that, when the following transport car approaches the preceding quiescent transport car, said drive-release operating means (49) of the preceding quiescent transport car disengages the driven body (38) of the following transport car and the pusher (107).

4. A conveying system in accordance with claim 3, wherein said driven body (38) is mounted to guidance means (31) disposed at a front end of the front movable body (12), and said drive-release operating means (49) is mounted to guidance means (40) disposed at a rear end of the rear movable body (14), wherein at least one of the guidance means (31, 40) in association with the driven body (38) and the drive-release operating means (49) is supported movably within a fixed range in the running direction relative to the movable body (14) supporting said guidance means, and is held at a fixed position by a spring (50).

5. A conveying system in accordance with claim 1, wherein an engage piece (59a) and an engageable portion (59b) which are disengageable from each other and connecting the preceding and following adjoining transport cars are disposed at front and rear ends of the main body (10) of the transport cars (10).

6. A conveying system in accordance with claim 1, wherein movable bodies (215, 214) of the main body (210) of the transport car (200) are coupled by coupling means (240A) swingably in a laterally horizontal direction while the transport cars (200) are connected in endless train by the coupling means (240B) for coupling swingably in the laterally horizontal direction, and a conveying path (205) is endless so that a group of transport cars (200) connected in endless train circulate.

7. A conveying system in accordance with claim 6, wherein the main body (210) of the transport cars (200) is constituted by a movable body (215) having a support (253) for objects to be conveyed and a movable body (241) having a work deck (250).

8. A conveying system in accordance with claim 6 or claim 7, wherein an expansion allowing portion (248) is provided for allowing expansion of the total length of a group of transport cars (200) connected in endless train.

9. A conveying system in accordance with claim 6, 7 or 8, wherein at least one movable body among the movable bodies (215, 241) constituting the main body (210) of, at least, one of the transport cars (200) is constituted adjustably lengthwise in the running direction.

10. A conveying system in accordance with claim 1, 5 or 6, wherein the support for objects to be conveyed in the transport cars (300) is constituted by a moving car (307) for supporting objects to be conveyed, which is disengageable from the main body (306) of the transport cars (300) and drivable on a running path (327a) provided above the running path of the transport cars (306).

11. A conveying system in accordance with claim 10, wherein said moving car (307) for supporting objects to be conveyed is provided with a coupling pin (330) which is movable up and down at its front-end side of the moving car, and a guide roller (331) which is movable up and down at its rear-end side of the moving car, whereas the running path for said moving car (307) is provided with a guide slit (328) through which said coupling pin (330) is extended movably and said guide roller (328) is guided, whereas the main body (306) of the transport cars (300) is provided with a pin hole (324) through which said coupling pin (330) is engageable and disengageable vertically.

## Patentansprüche

1. Fördersystem, welches aufweist: Führungsschienen (3), die entlang einem Förderweg (5) angeordnet sind, der Kurvenabschnitte (5B) aufweist, Transportfahrzeuge (10), die beweglich durch die Führungsschienen (3) gehaltert werden, und eine Reibungsvorschubvorrichtung (70) für die Transportfahrzeuge, wobei die Transportfahrzeuge (10) einen Hauptkörper (11) aufweisen, der beweglich auf den Führungsschienen durch Führungsvorrichtungen (30,31,40) gehaltert ist, und eine Halterung (25) für zu fördernde Gegenstände, und die Vorschubvorrichtung (70) an einem geeigneten Ort in dem Förderweg (5) angeordnet ist, und eine Vorschubrolle (79) sowie einen Motor (76) zum Antrieb der Vorschubrolle aufweist;
**dadurch gekennzeichnet, dass**
der Hauptkörper (11) des Transportfahrzeuges (10) mehrere bewegliche Körper (12,13,14) in der Fahrrichtung aufweist, eine Kupplungsvorrichtung (20) zum Kuppeln der beweglichen Körper auf solche Weise, dass eine nachgebende Relativbewegung zwischen den beweglichen Körpern an den Kurvenabschnitten (5B) in dem Förderweg ermöglicht wird, und angetriebene Stirnflächen (15), die auf den beweglichen Körpern (12,13,14) parallel zur Fahrrichtung vorgesehen sind, und dass die Halterung (25) für zu fördernde Gegenstände auf zumindest einem der beweglichen Körper (12,13,14) vorgesehen ist, und die Vorschubrolle (79) der Vorschubvorrichtung (70) dazu ausgebildet ist, auf die angetriebenen Stirnflächen (15) der beweglichen Körper einzuwirken.

2. Fördersystem nach Anspruch 1, bei welchem vordere und hintere Enden des Hauptkörpers (11) der Transportfahrzeuge (10) mit einem Kontaktabschnitt (56,57) versehen sind, der dazu ausgebildet ist, einen anderen Kontaktabschnitt zu berühren, wenn das vorangehende Transportfahrzeug von dem folgenden Transportfahrzeug geschoben wird.

3. Fördersystem nach Anspruch 1 oder 2, bei welchem in dem Förderweg (5) eine Zone (6) vorgesehen ist, in welcher das Transportfahrzeug (10) von der Vorschubvorrichtung (70) angetrieben wird, sowie weiterhin eine Zone (7), in welcher das Transportfahrzeug zwangsweise von einer außer Eingriff bringbaren Vorschubvorrichtung (100) angetrieben wird, wobei die außer Eingriff bringbare Vorschubvorrichtung (100) einen angetriebenen Körper (38) aufweist, der an einem Förderendabschnitt des Hauptkörpers (11) des Transportfahrzeugs angeordnet ist, eine Antriebslösebetätigungsvorrichtung (49), die an einem Hinterendabschnitt des Hauptkörpers (11) vorgesehen ist, eine Schubvorrichtung (107), die sich entlang dem Förderweg (5) bewegt, und mit dem angetriebenen Körper (38) in Eingriff steht, und der angetriebene Körper und die Schubvorrichtung (107) voneinander lösbar sind, so dass dann, wenn sich das folgende Transportfahrzeug an das vorangehende, stillstehende Transportfahrzeug annähert, die Antriebslösebetätigungsvorrichtung (49) des vorangehenden, stillstehenden Transportfahrzeugs den angetriebenen Körper (38) des folgenden Transportfahrzeugs und die Schubvorrichtung (107) voneinander löst.

4. Fördersystem nach Anspruch 3, bei welchem der angetriebene Körper (38) an einer Führungsvorrichtung (31) angebracht ist, die an einem Vorderende des vorderen beweglichen Körpers (12) angeordnet ist, und die Antriebslösebetätigungsvorrichtung (49) an einer Führungsvorrichtung (40) angebracht ist, die an einem hinteren Ende des hinteren beweglichen Körpers (14) angeordnet ist, wobei zumindest eine der Führungsvorrichtungen (31,40) zusammen mit dem angetriebenen Körper (38) und der Antriebslösebetätigungsvorrichtung (49) beweglich innerhalb eines festen Bereiches in der Fahrrichtung in bezug auf den beweglichen Körper (14) gehaltert ist, der die Führungsvorrichtung haltert, und in einer festen Position durch eine Feder (50) gehalten wird.

5. Fördersystem nach Anspruch 1, bei welchem ein Eingriffsstück (59a) und ein in Eingriff bringbarer Abschnitt (59b), die voneinander außer Eingriff bringbar sind, und das vorangehende und das folgende, benachbarte Transportfahrzeug verbinden, an vorderen und hinteren Ende des Hauptkörpers (10) der Transportfahrzeuge (10) angeordnet sind.

6. Fördersystem nach Anspruch 1, bei welchem bewegliche Körper (215,214) des Hauptkörpers (210) des Transportfahrzeugs (200) durch eine Kupplungsvorrichtung (240A) gekuppelt sind, die in einer Richtung quer und horizontal verschwenkbar ist, während die Transportfahrzeuge (200) als Endloszug durch die Kupplungsvorrichtung (240B) zum verschwenkbaren Kuppeln in der Richtung quer und horizontal verbunden sind, und ein Förderweg (205) endlos ist, sodass eine Gruppe von Transportfahrzeugen (200), die als Endloszug verbunden sind, umläuft.

7. Fördersystem nach Anspruch 6, bei welchem der Hauptkörper (210) der Transportfahrzeuge (200) durch einen beweglichen Körper (215) gebildet wird, der eine Halterung (253) für zu fördernde Gegenstände aufweist, und durch einen beweglichen Körper (241), der eine Arbeitsplattform (250) aufweist.

8. Fördersystem nach Anspruch 6 oder Anspruch 7, bei welchem ein Ausdehnungszulassungsabschnitt (248) vorgesehen ist, um eine Ausdehnung der Gesamtlänge einer Gruppe von Transportfahrzeugen (200) zu gestatten, die als Endloszug verbunden sind.

9. Fördersystem nach Anspruch 6, 7 oder 8, bei welchem zumindest ein beweglicher Körper unter den beweglichen Körpern (215,241), welche den Hauptkörper (210) von zumindest einem der Transportfahrzeuge (200) bilden, in Längsrichtung in der Fahrrichtung einstellbar ausgebildet ist.

10. Fördersystem nach Anspruch 1, 5 oder 6, bei welchem die Halterung für in den Transportfahrzeugen (300) zu fördernde Gegenstände durch ein bewegliches Fahrzeug (307) zum Haltern von zu fördernden Gegenständen gebildet wird, welches von dem Hauptkörper (306) der Transportfahrzeuge (300) außer Eingriff bringbar ist, und auf einem Fahrweg (327a) angetrieben werden kann, der oberhalb des Fahrweges der Transportfahrzeuge (306) vorgesehen ist.

11. Fördersystem nach Anspruch 10, bei welchem das bewegliche Fahrzeug (307) zum Haltern von zu fördernden Gegenständen mit einem Kupplungsstift (330) versehen ist, der an seiner Vorderendseite des beweglichen Fahrzeuges nach oben und unten bewegbar ist, und mit einer Führungsrolle (331), die an ihrer hinteren Endseite des beweglichen Fahrzeugs nach oben und unten bewegbar ist, wogegen der Fahrweg für das bewegliche Fahrzeug (307) mit einem Führungsschlitz (328) versehen ist, durch welchen sich der Kupplungsstift (330) bewegbar erstreckt, und durch welchen die Führungsrolle (328) geführt wird, wogegen der Hauptkörper (306) der Transportfahrzeuge (300) mit einem Stiftloch (324) versehen ist, durch welches der Kupplungsstift (330) in Vertikalrichtung in Eingriff und außer Eingriff bringbar ist.

## Revendications

1. Système de transport comprenant : des rails de guidage (3) disposés le long d'un trajet de transport (5) comportant des sections courbes (5B), des chariots de transport (10) supportés de façon mobile par lesdits rails de guidage (3), et un dispositif d'avance à friction (70) destiné aux chariots de transport, dans lequel lesdits chariots de transport (10) comprennent un corps principal (11) supporté sur lesdits rails de guidage de façon mobile par un moyen de guidage, (30, 31, 40) et un support (25) pour les objets à transporter, et ledit dispositif d'avance (70) est disposé à un emplacement approprié dans ledit trajet de transport (5) et comprend un rouleau d'avance (79) et un moteur (76) destiné à entraîner le rouleau d'avance, caractérisé en ce que ledit corps principal (11) du chariot de transport (10) comporte une pluralité de corps mobiles (12, 13, 14) dans la direction de circulation, un moyen de couplage (20) destiné à coupler les corps mobiles de façon à autoriser un déplacement avec un jeu relatif entre les corps mobiles au niveau des sections de courbe (5B) dans le chariot de transport, et des faces entraînées (15) formées sur les corps mobiles (12, 13, 14) parallèlement à la direction de circulation, et ledit support (25) destiné aux objets à transporter est disposé sur, au moins, l'un desdits corps mobiles (12, 13, 14) et ledit rouleau d'avance (79) du dispositif d'avance (70) est conçu pour agir sur les faces entraînées (15) desdits corps mobiles.

2. Système de transport selon la revendication 1, dans lequel les extrémités avant et arrière du corps principal (12) des chariots de transport (10) sont munies d'une partie de contact (56, 57) conçue pour entrer en contact l'une avec l'autre lorsque le chariot de transport précédent est poussé par le chariot de transport suivant.

3. Système de transport selon la revendication 1 ou 2, dans lequel dans le trajet de transport (5), sont prévues une zone (6) dans laquelle le chariot de transport (10) est entraîné par ledit dispositif d'avance (70), et en outre une zone (7) dans laquelle le chariot de transport est entraîné de façon forcée par un dispositif d'avance débrayable (100), dans lequel ledit dispositif d'avance débrayable (100) comprend un corps mené (38) disposé au niveau d'une partie d'extrémité avant du corps principal (11) du chariot de transport, un moyen d'actionnement d'entraînement-libération (99) disposé au niveau d'une partie d'extrémité arrière du corps principal (11), un butoir (107) se déplaçant le long du trajet de transport (5) et en prise avec ledit corps mené (38), et ledit corps mené ainsi que ledit pousseur (107) sont débrayables l'un de l'autre de sorte que, lorsque le chariot de transport suivant se rapproche du chariot de transport au repos précédent, ledit moyen d'actionnement d'entraînement-libération (49) du chariot de transport au repos précédent débraye le corps mené (38) du chariot de transport suivant et le butoir (107).

4. Système de transport selon la revendication 3, dans lequel ledit corps mené (38) est monté sur un moyen de guidage (31) disposé au niveau d'une extrémité avant du corps mobile avant (12), et ledit moyen d'actionnement d'entraînement-libération (49) est monté sur un moyen de guidage (40) disposé au niveau d'une extrémité arrière du corps mobile arrière (14), dans lequel au moins l'un des moyens de guidage (31, 40) en association avec le corps mené (38) et du moyen d'actionnement d'entraînement-libération (49) est supporté de façon mobile à l'intérieur d'une plage fixe dans la direction de circulation par rapport au corps mobile (14) supportant ledit moyen de guidage, et est maintenu à une position fixe par un ressort (50).

5. Système de transport selon la revendication 1, dans lequel une pièce d'accrochage (59a) et une partie pouvant être accrochée (59b) qui sont décrochables l'une de l'autre et reliant les chariots de transport voisins précédent et suivant sont disposés au niveau des extrémités avant et arrière du corps principal (10) des chariots de transport (10).

6. Système de transport selon la revendication 1, dans lequel des corps mobiles (215, 214) du corps principal (210) du chariot de transport (200) sont accouplés par un moyen de couplage (240A) pouvant basculer dans une direction horizontale latérale tandis que les chariots de transport (200) sont reliés suivant un train sans fin par le moyen de couplage (240b) en vue d'un couplage par basculement dans la direction horizontale latérale, et un trajet de transport (205) est sans fin de sorte qu'un groupe de chariots de transport (200) reliés suivant un train sans fin, circule.

7. Système de transport selon la revendication 6, dans lequel le corps principal (210) des chariots de transport (200) est constitué d'un corps mobile (215) comportant un support (253) pour des objets devant être transportés et un corps mobile (241) comportant un plateau de travail (250).

8. Système de transport selon la revendication 6 ou la revendication 7, dans lequel une partie permettant une extension (248) est prévue pour permettre l'extension de la longueur totale d'un groupe de chariots de transport (200) reliés suivant un train sans fin.

9. Système de transport selon la revendication 6, 7 ou 8, dans lequel au moins un corps mobile parmi les corps mobiles (215, 241) constituant le corps principal (210) d'au moins l'un des chariots de transport (200) est constitué avec une longueur ajustable dans la direction de la circulation.

10. Système de transport selon la revendication 1, 5 ou 6, dans lequel le support pour des objets à transporter dans les chariots de transport (300) est constitué d'un chariot mobile (307) destiné à supporter des objets devant être transportés, qui est débrayable du corps principal (306) des chariots de transport (300) et peut être entraîné sur un trajet de circulation (327a) disposé au-dessus du trajet de circulation des chariots de transport (306).

11. Système de transport selon la revendication 10, dans lequel ledit chariot mobile (307) destiné à supporter des objets devant être transportés est muni d'une broche d'accouplement (330) qui est mobile vers le haut et vers le bas au niveau de son côté de l'extrémité avant du chariot mobile, et un rouleau de guidage (331) qui est mobile vers le haut et vers le bas au niveau du côté de son extrémité arrière du chariot mobile, alors que le trajet de circulation pour ledit chariot mobile (307) est muni d'une fente de guidage (328) au travers de laquelle ladite broche d'accouplement (330) s'étend de façon mobile et ledit rouleau de guidage (328) est guidé, alors que le corps principal (306) des chariots de transport (300) est muni d'un alésage de broche (324) au travers duquel ladite broche d'accouplement (330) peut s'engager et se dégager verticalement.
